(19) Europäisches Patentamt
European Patent Office
Office européen des brevets

(11) EP 4 369 241 A1

(12) # EUROPEAN PATENT APPLICATION
published in accordance with Art. 153(4) EPC

(43) Date of publication:
**15.05.2024 Bulletin 2024/20**

(21) Application number: **22848437.4**

(22) Date of filing: **22.07.2022**

(51) International Patent Classification (IPC):
***G06F 30/20*** (2020.01) ***G06F 17/18*** (2006.01)
***G01D 21/02*** (2006.01) ***G06F 119/08*** (2020.01)
***G06F 119/14*** (2020.01)

(86) International application number:
**PCT/CN2022/107314**

(87) International publication number:
**WO 2023/005832 (02.02.2023 Gazette 2023/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.07.2021 CN 202110859908**

(71) Applicant: **Dalian Sanhuan Composite Material Technology Development Co., Ltd.**
**Dalian, Liaoning 116103 (CN)**

(72) Inventors:
- **WEI, Bailin**
  **Dalian, Liaoning 116103 (CN)**
- **SUN, Nana**
  **Dalian, Liaoning 116103 (CN)**
- **YANG, Liang**
  **Dalian, Liaoning 116103 (CN)**
- **LIN, Mao**
  **Dalian, Liaoning 116103 (CN)**
- **SHUANG, Wen**
  **Dalian, Liaoning 116103 (CN)**
- **ZONG, Yubin**
  **Dalian, Liaoning 116103 (CN)**
- **BA, Jin**
  **Dalian, Liaoning 116103 (CN)**
- **SUN, Chengyu**
  **Dalian, Liaoning 116103 (CN)**

(74) Representative: **Proi World Intellectual Property GmbH**
**Obermattweg 12**
**6052 Hergiswil, Kanton Nidwalden (CH)**

(54) **METHOD FOR CALCULATING OPERATING STATE OF THRUST BEARING ON BASIS OF OIL FILM STRESS TEMPERATURES, AND SYSTEM**

(57) Provided are a method for calculating an operating state of a bearing on the basis of oil film stress temperatures, and a system. In the present invention, thrust pad data is acquired by means of pad body input oil temperature sensors and/or oil channel temperature sensors, oil film temperature sensors, and pad body temperature sensors installed on thrust pads; and a model is constructed by means of the acquired data. An operating stress state of a thrust pad after installation can be evaluated, a dynamic operating standard can be established, and whether a machine group is safely operating can be also determined, an operating state and a stress situation of a thrust bearing in operation can be more scientifically and reliably monitored intuitively and in real time, and a gap in thrust bearing operating stress monitoring technology is filled. Application software developed on the basis thereof performs automated diagnostic analysis on the operating state of the machine group according to an operational numerical model, support is provided for state inspection and modification and intelligent operation and maintenance of the machine group, and the model has great significance for building an intelligent operation and maintenance service platform for a bearing.

EP 4 369 241 A1

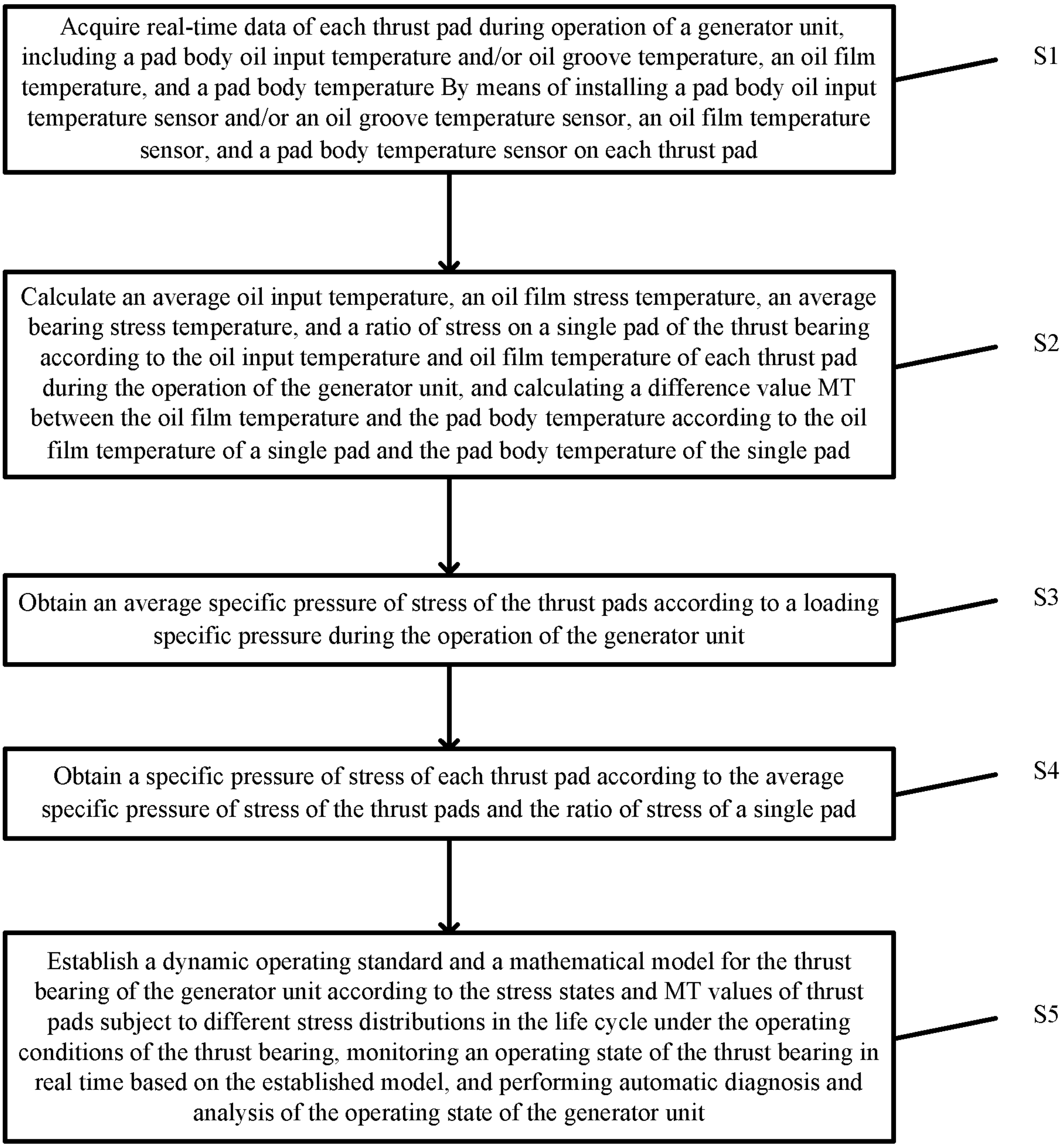
Acquire real-time data of each thrust pad during operation of a generator unit, including a pad body oil input temperature and/or oil groove temperature, an oil film temperature, and a pad body temperature By means of installing a pad body oil input temperature sensor and/or an oil groove temperature sensor, an oil film temperature sensor, and a pad body temperature sensor on each thrust pad
S1
Calculate an average oil input temperature, an oil film stress temperature, an average bearing stress temperature, and a ratio of stress on a single pad of the thrust bearing according to the oil input temperature and oil film temperature of each thrust pad during the operation of the generator unit, and calculating a difference value MT between the oil film temperature and the pad body temperature according to the oil film temperature of a single pad and the pad body temperature of the single pad
S2
Obtain an average specific pressure of stress of the thrust pads according to a loading specific pressure during the operation of the generator unit
S3
Obtain a specific pressure of stress of each thrust pad according to the average specific pressure of stress of the thrust pads and the ratio of stress of a single pad
S4
Establish a dynamic operating standard and a mathematical model for the thrust bearing of the generator unit according to the stress states and MT values of thrust pads subject to different stress distributions in the life cycle under the operating conditions of the thrust bearing, monitoring an operating state of the thrust bearing in real time based on the established model, and performing automatic diagnosis and analysis of the operating state of the generator unit
S5

**FIG. 1**

## Description

### TECHNICAL FIELD

The present invention relates to the field of bearing operation and maintenance, in particular to a method and system for calculating the operating state of a thrust bearing based on oil film stress temperature.

### BACKGROUND ART

Thrust bearings are applied to hydropower, wind power, nuclear power, industrial gearboxes, special industries, and other fields. A thrust bearing is of great significance to the safety, stability, and reliability of a generator unit in operation, and its stress state directly affects the safe operation of the generator unit. Therefore, bearing pad stress, as one of the important indicators for judging the operating state of the thrust bearing, plays a key role.

At the present stage, stress state of thrust pads of thrust bearing (particularly a composite thrust bearing) has always been one of the hot and difficult issues in the bearing field that have been concerned by people for a long time. The Chinese national standard GB/T8564-2003 of *Specification Installation of Hydraulic Turbine Generator Units* is the basis for installation, commissioning and testing of hydraulic turbine generator units and the ancillary equipment thereof, and also the main basis for unit acceptance and assessment, and is suitable for installation of various types of hydraulic turbine generator units and the auxiliary equipment thereof. Chinese water conservancy industry standard SL 668-2014 of *Guide of Thrust Bearing and Guide Bearing Installation and Adjustment Technology for Hydrogenerating Unit* discloses the technology for installation and alignment of thrust bearings and guide bearings (including Babbitt bearings and composite thrust bearings) for hydraulic turbine generator units. Although the criteria for thrust bearing installation and adjustment are described in the above standards, whether the installation is qualified or not is judged according to the acceptance standard (i.e. the installation standard), or is judged by means of the temperature difference between pad bodies according to the operator's experience and feeling. In the process of implementing the standards, judgment can only depend on the operator's experience and feeling usually due to the differences in old and new degrees of the generator units and the ways of support. Whether the installation of hydroelectric generator units is qualified or not is often judged by referring to the temperature difference between adjacent pad bodies being less than 3 °C during operation, which is the acceptance standard for Babbitt bearings. Composite thrust bearings have good heat resistance and poor thermal conductivity as well as hysteresis in the pad body temperature, it is not accurate and scientific to judge the stress condition based on the temperature difference.

Installation of Babbitt bearings and composite thrust bearings in other application fields is inspected and accepted usually based on the operator's experience and feeling. For example, in the field of industrial gearboxes, the common method for detecting whether the thrust pad is uniformly stressed is to observe whether the colored area of the thrust pad reaches more than 90% during installation. However, there is still a gap in the monitoring of stress on the thrust pad in the operating state.

Some research institutions have tried using strain gauges to assist in the installation and adjustment of thrust pads, which is usually limited by actual positions and working conditions in the actual application process. This method is mostly limited to the experimental research, and an effective and practical method is still needed to monitor and accept the installation of thrust pads.

At present, standards for use of Babbitt bearings vary due to different operating conditions of different hydroelectric generator units. For example, some hydroelectric generator units give an alarm when the pad body temperature is 60 °C and are shut down when the pad body temperature is 65 °C, and some give an alarm when the pad body temperature is 80 °C and are shut down when the pad body temperature is 85 °C. There is only one standard for the operation of composite thrust bearings, that is, the thrust pad body temperature is used as the basis for alarm-giving and shutdown. Composite thrust bearings give an alarm when the pad body temperature is 60 °C and are shut down when the pad body temperature is 65 °C. It is generally believed that in the actual operation process, a better performance is achieved at a lower pad body temperature.

### SUMMARY

To solve the above technical problems, the present invention provides a method and system for calculating the operating state of a thrust bearing based on oil film stress temperatures. The system of the present invention can scientifically, reliably, and visually monitor the stress condition and operating state of a composite thrust bearing in real time, avoiding the irrationality of inspecting and accepting the installation condition by means of the pad body temperature difference, filling in a gap in the thrust pad stress monitoring technology, and establishing a new standard for dynamic inspection and acceptance of installation of composite thrust pads. Based on the new standard, application software is developed, and the operating state of a generator unit is automatically diagnosed and analyzed. The present invention provides support for the intelligent operation and maintenance and state overhaul of the generator unit, and provides a basis for building a platform for operation and maintenance of composite thrust bearings. The technical means employed by the present invention are as follows:

A method for calculating an operating state of a thrust bearing based on an oil film stress temperatures, including the following steps of:

S1: by means of installing a pad body oil input temperature sensor and/or an oil groove temperature sensor, an oil film temperature sensor, and a pad body temperature sensor on each thrust pad, acquiring real-time data of each thrust pad during operation of a generator unit, where the real-time data includes a pad body oil input temperature and/or oil groove temperature, an oil film temperature, and a pad body temperature;

S2: calculating an average oil input temperature, an oil film stress temperature, an average bearing stress temperature, and a ratio of stress on a single pad of the thrust bearing according to the oil input temperature and oil film temperature of each thrust pad during the operation of the generator unit, and calculating a difference value *MT* between the oil film temperature and the pad body temperature according to the oil film temperature of a single pad and the pad body temperature of the single pad;

S3: obtaining an average specific pressure of stress of the thrust pads according to a loading specific pressure during the operation of the generator unit;

S4: obtaining a specific pressure of stress of each thrust pad according to the average specific pressure of stress of the thrust pads and the ratio of stress of a single pad; and

S5: establishing a dynamic operating standard and a mathematical model for the thrust bearing of the generator unit according to the stress states and MT values of thrust pads subject to different stress distributions in the life cycle under the operating conditions of the thrust bearing, monitoring an operating state of the thrust bearing in real time based on the established model, and performing automatic diagnosis and analysis of the operating state of the generator unit.

Further, the average oil input temperature of the thrust bearing is calculated according to the following equation:

$$\bar{T_i} = \frac{T_{i,a} + T_{i,b} + T_{i,c} + \ldots + T_{i,j}}{m}$$

where $T_i$ is the average oil input temperature of a thrust bearing with the unit of °C; $T_{i,a}$, $T_{i,b}$, $T_{i,c}$...$T_{i,j}$ are the oil input temperatures of thrust pads installed with an oil input temperature sensors with the unit of °C, where *a, b, c. .j* are the numbers of the thrust pads installed with oil input temperature sensors, and *m* is a number of the oil input temperature sensors; if the oil input temperature sensor is not installed, the average oil input temperature can be substituted by the oil groove temperature.

Further, the oil film stress temperature is calculated according to the following equation:

$$T_{s,x} = T_{o,x} - \bar{\mathrm{T}}_{\mathrm{i}}$$

where $T_{s,x}$ is a single pad stress temperature of a thrust pad numbered x with the unit of °C, $T_{o,x}$ is an oil film temperature of a thrust pad numbered x with the unit of °C, $\overline{T}_i$ is the average oil input temperature of the thrust bearing with the unit of °C, and x is a thrust pad number being 1, 2, 3... n.

Further, the average bearing stress temperature is calculated according to the following equation:

$$\bar{T_s} = \frac{\sum_1^n T_{s,x}}{n}$$

where $\overline{T}_s$ is the average bearing stress temperature with the unit of °C, $T_{s,x}$ is the single pad stress temperature of a thrust pad numbered x with the unit of °C, n is a number of thrust pads employed in the thrust bearing, and x is the thrust pad number being 1, 2, 3 ... n.

Further, the ratio of stress of a single pad is calculated according to the following equation:

$$t_{s,x} = \frac{T_{s,x}}{\bar{T_s}}$$

where $t_{s,x}$ is a ratio of stress on a single pad numbered x, $T_{s,x}$ is the single pad stress temperature of a thrust pad numbered x with the unit of °C, $\overline{T_s}$ is the average stress temperature with the unit of °C, and x is the thrust pad number being 1 , 2, 3... n.

Further, the specific pressure of stress of a single pad is calculated according to the following equation:

$$P_x = \bar{P} * t_{s,x}$$

where $P_x$ is the specific pressure of stress of a single pad numbered x with the unit of °C, $\overline{P}$ is the average specific pressure of the stress on the thrust bearing with the unit of MPa, $t_{s,x}$ is the ratio of stress on a thrust pad numbered x, and $x$ is the thrust pad number being 1, 2, 3... n.

Further, the difference value $MT$ between the oil film temperature and the pad body temperature is calculated according to the following equation:

$$MT_x = T_{o,x} - T_{p,x}$$

$$MT_{limit} = MT_{min}$$

where $MT_x$ is the difference value between the oil film temperature and the body temperature of a thrust pad numbered x with the unit of °C, $T_{o,x}$ is the oil film temperature of a thrust pad numbered x with the unit of °C, $T_{p,x}$ is a pad body temperature of a thrust pad numbered x with the unit of °C, x is the thrust pad number being 1, 2, 3... n, $MT_{min}$ is the minimum $MT_x$ with the unit of °C, and $MT_{limit}$ is the $MT_{min}$ when the friction torque changes.

Further, the operating standard for the thrust bearing is divided into three levels as red, yellow, and green according to the ratio of stress of a single pad, a variation ratio of the established standard, and the *MT* value. On basis of a mathematic model established by simulating realistic and extreme working conditions through a simulation test bench, the red level is defined as when the friction torque changes or when stress state curves of two or more thrust pads change downwards under high-speed and heavy-load conditions or the $MT_{limit}$ appears under low-speed and heavy-load conditions, the yellow level is defined as when the stress state curve of one thrust pad changes downwards, and the green level is defined as when the stress state curves of all the thrust pads tend to be stabilize.

A system for calculating the operating state of a thrust bearing based on the an oil film stress temperatures includes:

A data acquisition device including a pad body oil input temperature sensor and/or an oil groove temperature sensor, an oil film temperature sensor, and a pad body temperature sensor installed on each thrust pad, further including a signal acquisition module for the said sensors, an upper industrial computer, and a data display software interface, which are configured to acquire the oil input temperature and/or oil groove temperature, oil film temperature, and pad body temperature of each thrust pad during operation of a generator unit;

A data calculation unit configured to calculate the average oil input temperature, oil film stress temperature, average bearing stress temperature, and ratio of stress on a single pad of each thrust pad according to the acquired data, to calculate the difference value MT between the oil film temperature and the pad body temperature according to the oil film temperature of a single pad and the pad body temperature of the single pad, to obtain the average specific pressure of stress of the thrust pads according to the loading specific pressure during the operation of the generator unit, and to obtain the specific pressure of stress of a single pad according to the average specific pressure of stress of the thrust pads and the ratio of stress of a single pad; where the data calculation unit presents and displays final results through programming of the data acquisition device based on calculation method of logical relationship between various data;

A data analysis unit configured to establish a model based on the calculated values and perform automatic diagnosis and analysis of the operating state of the generator unit according to a preset standard; where the data analysis unit, by comparing the results of the data calculation unit with the preset standard in real time, is configured to determine the deviation between the actual value and the preset standard, and to automatically compute and display the diagnostic results through an integrated software interface.

Specifically, the preset standard is as follows: based on the existing bearing installation standards, a dynamic operating standard is established for the stress state of a thrust bearing, which is divided into three levels as red, yellow, and green according to the ratio of stress of a single pad, the variation ratio of the established standard, and the *MT* value. On basis of mathematic model established by simulating realistic and extreme working conditions through a simulation test bench, the red level is defined as when the friction torque changes or when stress curves of two or more thrust pads change downwards under high-speed and heavy-load conditions or the $MT_{limit}$ appears under low-speed and heavy-load conditions, the yellow level is defined as when the stress state curve of one thrust pad changes downwards, and the green level is defined as when the stress state curves of all the thrust pads tend to be stable.

Further, the data acquisition device further includes a weighing sensor, which is configured to verify the bearing stress state calculated through stress temperature. A customized bearing operating standard can be established since differences in thrust pad materials used for different generator units or differences in old and new degrees of the generator units or differences in stress applied on the thrust pads during installation. By means of integrating operating data about the thrust bearing of the generator unit through the system and transforming the operating data into a logical calculation equation according to the operating standard, a bearing stress analysis model is established as the basis for building a sliding bearing operation and maintenance platform.

The stress analysis method and model are capable to monitor the stress state of a single pad of a thrust bearing in real time, and to automatically generate a stress state analysis report through the system according to the dynamic operating standard.

The present invention constructs a model according to the acquired data, which can not only check the stress states of thrust pads during operation after installation and establish dynamic operating standard, but also can determine whether a generator unit is operating safely. In addition, the present invention can more scientifically, reliably, and visually monitor the stress condition and operating state of a thrust bearing in real time, and fill in a gap in the thrust pad stress monitoring technology. The application software developed on the basis of the present invention automatically diagnoses and analyzes the operating state of a generator unit according to the mathematical model for the operation, providing support for the intelligent operation and maintenance and state overhaul of the generator unit, and being of great significance for building a platform for intelligent operation and maintenance of thrust bearings.

## BRIEF DESCRIPTION OF THE DRAWINGS

In order to more clearly describe the technical solutions in the examples of the present invention or in the prior art, a brief introduction to the accompanying drawings required for the description of the examples or the prior art will be made below. Apparently, the accompanying drawings in the following description are merely some embodiments of the present invention, and those of ordinary skill in the art would also be able to derive other drawings from these drawings without making creative efforts.

FIG. 1 is a flow chart of a method for calculating the operating state of a thrust bearing based on an oil film stress temperature.

FIG. 2 is a mathematical model analysis diagram of embodiment 1 of the present invention in which simulates the stress condition of a hydroelectric generator unit using a test bearing to calculate the operating state thereof.

FIG. 3 is a mathematical model analysis diagram of embodiment 1 of the present invention in which simulates the weight of a hydroelectric generator unit using a test bearing to calculate the operating state thereof.

FIG. 4 is a comparison diagram of a ratio of stress on the 4# test thrust pad in embodiment 1 of the present invention calculated according to the stress condition and weight.

FIG. 5 is a mathematical model analysis diagram of embodiment 2 of the present invention in which a dynamic operation of a hydroelectric generator unit using simulated with Babbitt thrust pads is benchmarked against an established standard.

FIG. 6 is a mathematical model analysis diagram of embodiment 2 of the present invention in which a dynamic operation of a hydroelectric generator unit simulated with elastic metallic plastic thrust pads is benchmarked against an established standard.

FIG. 7 is a mathematical model analysis diagram of embodiment 3 of the present invention of an operating state of a hydroelectric generator unit simulated with conventional elastic metallic plastic test thrust pads.

FIG. 8 is a mathematical model analysis diagram of embodiment 3 of the present invention of an operating state of a hydroelectric generator unit simulated with elastic metallic plastic test thrust pads with high-pressure oil holes.

## DETAILED DESCRIPTION OF THE EMBODIMENTS

In order to make the objectives, technical solutions and advantages of the embodiments of the present invention clearer, the technical solutions in the embodiments of the present invention will be clearly and completely described below in combination with the accompanying drawings in the embodiments of the present invention. Apparently, the embodiments described are merely some rather than all of the embodiments of the present invention. Based on the embodiments of the present invention, all other embodiments acquired by those of ordinary skill in the art without making creative efforts fall within the scope of protection of the present invention.

The principle of a method for calculating the operating state of a thrust bearing based on an oil film stress temperatures is as follows:

A set of thrust bearing is generally composed of n thrust pads. During the operation of a generator unit, a wedge gap (namely an oil film) is formed between a working surface of a thrust pad and a thrust flange (a runner plate). When the thrust flange rotates, lubricating oil is squeezed in the wedge gap and the pressure is increased, so that the oil film is capable to withstand an axial thrust. At the same time, the lubricating oil flows out after heat generation by friction, which reduces friction and eliminates wear. At this time, the difference between the oil input temperature and the oil film temperature is formed, namely the oil film stress temperature of the thrust pad. The pressure, temperature, and thickness of the oil film are mainly related to factors such as the loading specific pressure of the thrust pad surface, relative motion speed of the thrust flange and the thrust pad, flatness of working surface of the thrust flange, oil input temperature, oil viscosity, and surface size of the thrust pad and other geometrical shapes. During the operation of the generator unit, the factors such as the relative motion speed of the thrust flange and the thrust pad, the flatness of working surface of the thrust flange, and the surface size of the thrust pad and other geometrical shapes are all constant, while the oil viscosity changes with the oil input temperature. Therefore, the oil film temperature is mainly related to the oil input temperature, and the specific pressure (load) and the speed of the thrust pad surface. Further, the gradient difference between the oil film temperature and the oil input temperature (that is, the oil film stress temperature of the thrust pad) corresponds to the specific pressure of the thrust pad surface under certain conditions of speed, or corresponds to the rotation speed of the runner plate under certain conditions of specific pressure of the thrust pad surface, thereby establishing a relationship between the oil film stress temperature of the thrust pad and the specific pressure (load or stress) or speed of the thrust pad surface.

Specific steps are as follows:

S1: by means of installing a pad body oil input temperature sensor (or an oil groove temperature sensor), an oil film temperature sensor, and a pad body temperature sensor on each thrust pad, acquiring real-time data of each the thrust pad during operation of a generator unit, including the pad boy oil input temperature, oil film temperature, and pad body temperature;
S2: installing thrust pads and establishing a static acceptance standard for bearing installation according to Chinese national (industry) standards, and establishing a customized dynamic operating standard for stress state; after acceptance of the bearing installation according to the static acceptance standard, establishing, benchmarking against Chinese national (industry) standards, the customized dynamic operating standard for bearings of generator unit accordingly on the basis of taking into account the differences in new and old generator units and support modes;
S3: calculating an average oil input temperature (or oil groove temperature), an oil film stress temperature, an average stress temperature, and a ratio of stress on a single pad of the thrust bearing according to the oil input temperature and oil film temperature of each thrust pad during the operation of the generator unit, and calculating a *MT* value according to the oil film temperature of a single pad and the pad body temperature of the single pad;
S4: calculating an average specific pressure of stress of the thrust pads according to a loading specific pressure (load) during the operation of the generator unit;
S5: obtaining a specific pressure of stress of each thrust pad (load) according to the average specific pressure of stress of the thrust pads obtained in S4 and the ratio of stress of a single pad obtained in S3;
S6: in accordance with Chinese national (industry) standards and benchmarking against the operating temperature standard for thrust pad body of thrust bearing, establishing an oil film operating standard;
S7: establishing a dynamic operating standard involving three levels of red, yellow, and green and a mathematical model for the thrust bearing of the generator unit according to the stress states and MT values of the thrust pads subject to different stress distributions in the life cycle under the operating conditions of the thrust bearing; and
S8: on basis of the established mathematical model, developing a mathematical model software corresponding to associated information in cooperation with various professional R&D and manufacturing units, and building an IoT (Internet of Things) platform for intelligent steward-type operation and maintenance of sliding bearing system.

Embodiment 1 Comparison and verification of a method for calculating the operating state of a thrust bearing based on oil film stress temperatures

A test bench was equipped with 8 pieces per set of elastic metallic plastic thrust pads (245$cm^2$ per piece). A pad body temperature sensor, an oil film temperature sensor, and a weighing sensor were installed on each of 1#-8# test thrust pads, and a pad body oil input temperature sensors was installed on each of 1#, 3#, 5#, and 7# test thrust pads. The thrust pads were installed in accordance with the Thrust Bearing Installation Standard, and acceptance results show that the thrust pads were qualified. The simulated linear velocity and specific pressure of a hydroelectric generator unit were 12.6 m/s and 3.92 MPa, respectively. The cooling water flow and lubricating oil flow were adjusted to control the oil input temperature at about 35 °C. 10% of the full load was loaded step by step, and relevant parameters were recorded after stable operation for 1 h at each step, and the stress of each single pad during operation was calculated.

The ratio of stress of a single pad was compared with the change of the value ratio of the weighing sensor to verify the accuracy and reliability of using the stress of a single pad equation to calculate the ratio of stress of thrust pad.

The parameters during the test operation are shown in Table 1.

Table 1 Parameters of a hydroelectric generator unit simulated by intelligent bearing test bench during operation

| Number of pads | Specific pressure MPa | Oil input temperature °C | Pad body temperature °C | Oil film temperature °C | Value of weighing sensor Kg | Number of pads | Specific pressure MPa | Oil input temperature °C | Pad body temperature °C | Oil film temperature °C | Value of weighing sensor Kg |
|---|---|---|---|---|---|---|---|---|---|---|---|
| 1# | 0.39 | 34.78 | 36.33 | 44.06 | 1055 | 1# | 2.35 | 34.75 | 39.74 | 53.75 | 5698 |
| 2# | | | 36.27 | 47.50 | 1119 | 2# | | | 40.54 | 60.40 | 5573 |
| 3# | | 34.50 | 36.14 | 43.80 | 1069 | 3# | | 34.10 | 39.84 | 58.20 | 5993 |
| 4# | | | 36.20 | 39.40 | 821 | 4# | | | 40.98 | 52.20 | 6537 |
| 5# | | 34.40 | 36.58 | 46.70 | 1136 | 5# | | 34.40 | 40.18 | 56.70 | 5701 |
| 6# | | | 36.74 | 40.80 | 1228 | 6# | | | 39.81 | 46.00 | 5608 |
| 7# | | 34.60 | 36.09 | 47.40 | 744 | 7# | | 34.70 | 39.53 | 60.90 | 5861 |
| 8# | | | 37.15 | 50.20 | 1246 | 8# | | | 41.39 | 65.40 | 7030 |
| 1# | 0.78 | 34.75 | 37.23 | 48.47 | 2014 | 1# | 2.74 | 34.78 | 40.23 | 54.40 | 6628 |
| 2# | | | 37.51 | 54.60 | 2029 | 2# | | | 41.03 | 61.80 | 6493 |
| 3# | | 34.60 | 37.28 | 49.90 | 2165 | 3# | | 34.20 | 40.45 | 59.50 | 6938 |
| 4# | | | 37.57 | 44.70 | 1793 | 4# | | | 41.34 | 52.90 | 7510 |
| 5# | | 34.50 | 37.67 | 52.30 | 2197 | 5# | | 34.40 | 40.56 | 57.80 | 6616 |
| 6# | | | 37.64 | 42.90 | 2144 | 6# | | | 40.25 | 46.60 | 6514 |
| 7# | | 34.70 | 37.02 | 52.70 | 1729 | 7# | | 34.70 | 39.94 | 61.90 | 6817 |
| 8# | | | 38.08 | 56.80 | 2679 | 8# | | | 42.20 | 66.90 | 7982 |
| 1# | 1.18 | 34.75 | 38.06 | 50.85 | 2835 | 1# | 3.14 | 34.75 | 40.41 | 54.42 | 7592 |
| 2# | | | 38.42 | 57.90 | 2893 | 2# | | | 41.26 | 63.80 | 7494 |
| 3# | | 34.50 | 38.13 | 53.40 | 3235 | 3# | | 34.10 | 41.06 | 60.80 | 7910 |
| 4# | | | 38.57 | 47.70 | 2735 | 4# | | | 41.73 | 53.80 | 8559 |
| 5# | | 34.50 | 38.70 | 55.30 | 3090 | 5# | | 34.30 | 40.88 | 59.50 | 7583 |
| 6# | | | 38.39 | 44.20 | 3030 | 6# | | | 40.98 | 47.30 | 7529 |
| 7# | | 34.60 | 37.82 | 56.20 | 2709 | 7# | | 34.60 | 40.51 | 65.00 | 7739 |
| 8# | | | 38.96 | 60.60 | 3754 | 8# | | | 43.21 | 69.00 | 9068 |
| 1# | 1.57 | 34.78 | 38.73 | 52.36 | 3726 | 1# | 3.53 | 34.80 | 40.62 | 55.31 | 8627 |
| 2# | | | 39.17 | 58.90 | 3814 | 2# | | | 41.70 | 65.40 | 8571 |
| 3# | | 34.50 | 38.88 | 55.60 | 4227 | 3# | | 33.70 | 41.26 | 61.60 | 8812 |
| 4# | | | 39.12 | 49.40 | 3856 | 4# | | | 41.94 | 54.50 | 9715 |
| 5# | | 34.50 | 39.43 | 55.50 | 4007 | 5# | | 34.20 | 41.08 | 60.90 | 8591 |
| 6# | | | 38.99 | 49.40 | 3883 | 6# | | | 41.39 | 47.80 | 8506 |
| 7# | | 34.70 | 38.60 | 58.40 | 3766 | 7# | | 34.40 | 40.72 | 66.70 | 8821 |
| 8# | | | 39.65 | 62.80 | 4839 | 8# | | | 44.17 | 70.70 | 10091 |
| 1# | 1.96 | 34.80 | 39.19 | 52.99 | 4671 | 1# | 3.92 | 34.93 | 41.21 | 55.93 | 9641 |
| 2# | | | 39.92 | 60.10 | 4637 | 2# | | | 41.83 | 66.60 | 9589 |

| | | | | | | | | | | | | |
|---|---|---|---|---|---|---|---|---|---|---|---|---|
| 3# | | 34.40 | 39.27 | 56.80 | 4935 | 3# | | 33.60 | 41.76 | 62.00 | 9623 |
| 4# | | | 40.54 | 51.20 | 5482 | 4# | | | 42.43 | 54.90 | 10795 |
| 5# | | 34.40 | 39.74 | 55.70 | 4686 | 5# | | 34.30 | 41.65 | 61.70 | 9519 |
| 6# | | | 39.35 | 45.50 | 4663 | 6# | | | 42.20 | 48.30 | 9423 |
| 7# | | 34.70 | 39.17 | 59.80 | 4834 | 7# | | 34.50 | 41.13 | 67.80 | 9855 |
| 8# | | | 40.54 | 63.80 | 5950 | 8# | | | 45.56 | 71.50 | 10958 |

Taking the specific pressure of 0.39 MPa as an example, the stress of a single pad was calculated as follows:

(1) calculating the average oil input temperature:

$$\bar{T_i} = \frac{\sum_i^n T_{i,x}}{n}$$

where $\overline{T}_i$ is the average oil input temperature of a thrust bearing with the unit of °C; $T_{i,x}$ is the oil input temperature of the thrust pad numbered x with the unit of °C, and $x$ is the thrust pad number being 1, 2, 3... n, where n is the number of thrust pads. In one embodiment, if only the oil groove temperature sensors rather than the oil input temperature sensors are installed, the average oil input temperature can be substituted by the oil groove temperature; if the oil input temperature sensors and the oil groove temperature sensors are installed simultaneously, the average oil input temperature is the mean of oil input temperatures of all thrust pads.

$$\bar{T_i} = \frac{34.78 + 34.5 + 34.4 + 34.6}{4} = 34.57℃$$

(2) calculating the oil film stress temperature

$$T_{s,x} = T_{o,x} - T_{i,x}$$

where $T_{s,x}$ is a single pad stress temperature of the thrust pad numbered x with the unit of °C, $T_{o,x}$ is an oil film temperature of the thrust pad numbered x with the unit of °C, $T_{i,x}$ is the oil input temperature of the thrust pad numbered x with the unit of °C, and x is the thrust pad number being 1, 2, 3... n.

$$T_{s,1} = 44.06 - 34.57 = 9.49℃$$

$$T_{s,2} = 47.5 - 34.57 = 12.93℃$$

$$T_{s,3} = 43.8 - 34.57 = 9.23℃$$

$$T_{s,4} = 39.4 - 34.57 = 4.83℃$$

$$T_{s,5} = 46.7 - 34.57 = 12.13℃$$

$$T_{s,6} = 40.8 - 34.57 = 6.23℃$$

$$T_{s,7} = 47.4 - 34.57 = 12.83℃$$

$$T_{s,8} = 50.2 - 34.57 = 15.63℃$$

(3) calculating the average bearing stress temperature

$$\bar{T_s} = \frac{\sum_1^n T_{s,x}}{n}$$

where $\overline{T}_s$ is the average bearing stress temperature with the unit of °C, $T_{s,x}$ is the single pad stress temperature of a thrust pad numbered x with the unit of °C, n is the number of thrust pads employed in the thrust bearing, and x is the thrust pad number being 1, 2, 3 ...n;

$$\bar{T_s} = \frac{9.49 + 12.93 + 9.23 + 4.83 + 12.13 + 6.23 + 12.83 + 15.63}{8} = 10.41℃$$

(4) calculating the ratio of stress of a single pad

$$t_{s,x} = \frac{T_{s,x}}{\bar{T_s}}$$

where $t_{s,x}$ is a ratio of stress on a single pad numbered x, $T_{s,x}$ is the single pad stress temperature of the thrust pad numbered x with the unit of °C, $\overline{T}_s$ is the average bearing stress temperature with the unit of °C, and x is the thrust pad number being 1 , 2, 3... n.

$$t_{s,1} = \frac{T_{s,1}}{\bar{T_s}} = \frac{9.49}{10.41} = 0.91$$

$$t_{s,2} = \frac{T_{s,2}}{\bar{T_s}} = \frac{12.93}{10.41} = 1.24$$

$$t_{s,3} = \frac{T_{s,3}}{\bar{T_s}} = \frac{9.23}{10.41} = 0.89$$

$$t_{s,4} = \frac{T_{s,4}}{\bar{T_s}} = \frac{4.83}{10.41} = 0.46$$

$$t_{s,5} = \frac{T_{s,5}}{\bar{T_s}} = \frac{12.13}{10.41} = 1.16$$

$$t_{s,6}=\frac{T_{s,6}}{\bar{T}_s}=\frac{6.23}{10.41}=0.60$$

$$t_{s,7}=\frac{T_{s,7}}{\bar{T}_s}=\frac{12.83}{10.41}=1.23$$

$$t_{s,8}=\frac{T_{s,8}}{\bar{T}_s}=\frac{15.63}{10.41}=1.50$$

(5) calculating the specific pressure of stress of a single pad

$$P_x=\bar{P}*t_{s,x}$$

where $P_x$ is the specific pressure of stress of a single pad numbered x with the unit of MPa, the loading specific pressure (load) during the operation of the generator unit is the average specific pressure P of stress of a single pad with the unit of MPa, $t_{s,x}$ is the ratio of stress of the single pad numbered x, and x is the thrust pad number being 1, 2, 3... n;

$$\bar{P}=0.39MPa$$

$$P_1=\bar{P}*t_{s,1}=0.39*0.91=0.36MPa$$

$$P_2=\bar{P}*t_{s,2}=0.39*1.24=0.48MPa$$

$$P_3=\bar{P}*t_{s,3}=0.39*0.89=0.35MPa$$

$$P_4=\bar{P}*t_{s,4}=0.39*0.46=0.18MPa$$

$$P_5=\bar{P}*t_{s,5}=0.39*1.16=0.45MPa$$

$$P_6=\bar{P}*t_{s,6}=0.39*0.6=0.23MPa$$

$$P_7=\bar{P}*t_{s,7}=0.39*1.23=0.48MPa$$

$$P_8=\bar{P}*t_{s,8}=0.39*1.5=0.59MPa$$

(6) calculating the mass of stress of a single pad

$$P_x=\frac{m_x*g}{S},$$

so that $m_x = P_x * \frac{S}{g}$

where $P_x$ is the specific pressure of the thrust pad numbered x with the unit of MPa, S is the pad surface area of a single pad with the unit of $mm^2$, $m_x$ is the stress of the thrust pad numbered x with the unit of kg, and $g$ is the acceleration of gravity being $10m/s^2$.

$$S = 24500mm^2$$

$$m_1 = P_1 * \frac{S}{g} = 0.36 * \frac{24500}{10} = 871kg$$

$$m_2 = P_2 * \frac{S}{g} = 0.48 * \frac{24500}{10} = 1187kg$$

$$m_3 = P_3 * \frac{S}{g} = 0.35 * \frac{24500}{10} = 847kg$$

$$m_4 = P_4 * \frac{S}{g} = 0.18 * \frac{24500}{10} = 443kg$$

$$m_5 = P_5 * \frac{S}{g} = 0.45 * \frac{24500}{10} = 1113kg$$

$$m_6 = P_6 * \frac{S}{g} = 0.23 * \frac{24500}{10} = 572kg$$

$$m_7 = P_7 * \frac{S}{g} = 0.48 * \frac{24500}{10} = 1177kg$$

$$m_8 = P_8 * \frac{S}{g} = 0.59 * \frac{24500}{10} = 1434kg$$

(7) calculating the *MT* value

$$MT_x = T_{o,x} - T_{p,x}$$

$$MT_{limit} = MT_{min}$$

where $MT_x$ is the difference value between the oil film temperature and the body temperature of the thrust pad numbered x with the unit of °C, $T_{o,x}$ is the oil film temperature of the thrust pad numbered x with the unit of °C, $T_{p,x}$ is the pad body temperature of the thrust pad numbered x with the unit of °C, x is the thrust pad number being 1, 2, 3... n, and $MT_{min}$ is the minimum $MT_x$ with the unit of °C, and $MT_{limit}$ is the $MT_{min}$ when the friction torque changes.

$$MT_1 = T_{o,1} - T_{p,1} = 44.06 - 36.33 = 7.73℃$$

$$MT_2 = T_{o,2} - T_{p,2} = 47.05 - 36.22 = 11.23℃$$

$$MT_3 = T_{o,3} - T_{p,3} = 43.80 - 36.14 = 7.66℃$$

$$MT_4 = T_{o,4} - T_{p,4} = 39.40 - 36.20 = 3.20℃$$

$$MT_5 = T_{o,5} - T_{p,5} = 46.70 - 36.58 = 10.12℃$$

$$MT_6 = T_{o,6} - T_{p,6} = 40.80 - 36.74 = 4.06℃$$

$$MT_7 = T_{o,7} - T_{p,7} = 47.40 - 36.09 = 11.31℃$$

$$MT_8 = T_{o,8} - T_{p,8} = 50.20 - 37.15 = 13.05℃$$

The MT values of the complete set of thrust pads were 3.2 to 13.05 °C.

Similarly, the specific pressures of stress of a single pad and the ratio of stress of a single pad were respectively calculated under the specific pressures of 0.78 MPa, 1.18 MPa, 1.57 MPa, 1.96 MPa, 2.35 MPa, 2.74 MPa, 3.14 MPa, 3.53 MPa, and 3.92 MPa, and the results are shown in Table 2.

Taking the ratio of stress as the ordinate and the load (specific pressure) or temperature or time as the abscissa, a mathematical model is established, and the operating state of each thrust pad is calculated by means of substituting the operating state change data of each thrust pad under different working conditions into the calculation method.

In Embodiment 1, a mathematical model was established by taking the ratio of stress as the ordinate and the specific pressure as the abscissa to compare the similarities and differences of the two calculation methods, and diagnose the operating state of the thrust bearing according to the standard.

According to the results of the generator unit simulated with elastic metallic plastic thrust pads mentioned above, a mathematical model was established. FIG. 2 shows the mathematical model analysis of stress calculation results, and FIG. 3 shows the mathematical model analysis of weighing sensor data calculation results. FIG. 4 shows the comparative analysis of mathematical models of the stress calculation and weighing calculation of the 4# test thrust pad.

There was no fluctuation in torque during the test. According to the mathematical model analysis of stress calculation results in FIG. 2, it can be seen that when $MT_{min}$ of the thrust pads was equal to 3.2°C and the specific pressure was lower than 1.18 MPa during operation, the stress state of each thrust pad fluctuated slightly but tended to stabilize after the specific pressure of greater than 1.18 MPa. It is mainly because that the elastic metallic plastic thrust pad is self-adjusted when the load is low, and the stress of the thrust pad tends to be stable after the load increases. The stress ratios of thrust pads calculated according to the stress are relatively scattered, but the stress ratios tend to be consistent under different specific pressure conditions, which are relatively stable and parallel, and subject to a certain regularity, indicating that the thrust pads are operating normally.

Table 2-1 Parameters and stress ratios of a hydroelectric generator unit simulated by elastic metallic plastic during operation

| Number of pads | Specific pressure MPa | Oil input temperature °C | Pad body temperature °C | Oil film temperature °C | Average oil film temperature °C | Stress temperature °C | Specific pressure of stress of a single pad MPa | Ratio of stress of a single pad | Stress of a single pad Kg | Value of weighing sensor Kg | Ratio of stress of a single pad calculated by weighing | *MT* value °C |
|---|---|---|---|---|---|---|---|---|---|---|---|---|
| 1# | 0.39 | 34.78 | 36.33 | 44.06 | 34.57 | 9.49 | 0.36 | 0.91 | 871 | 1055 | 0.98 | 7.73 |
| 2# | | | 36.27 | 47.50 | 34.57 | 12.93 | 0.48 | 1.24 | 1187 | 1119 | 1.04 | 11.23 |
| 3# | | 34.50 | 36.14 | 43.80 | 34.57 | 9.23 | 0.35 | 0.89 | 847 | 1069 | 0.99 | 7.66 |
| 4# | | | 36.20 | 39.40 | 34.57 | 4.83 | 0.18 | 0.46 | 443 | 821 | 0.76 | 3.20 |
| 5# | | 34.40 | 36.58 | 46.70 | 34.57 | 12.13 | 0.45 | 1.16 | 1113 | 1136 | 1.06 | 10.12 |
| 6# | | | 36.74 | 40.80 | 34.57 | 6.23 | 0.23 | 0.60 | 572 | 1228 | 1.14 | 4.06 |
| 7# | | 34.60 | 36.09 | 47.40 | 34.57 | 12.83 | 0.48 | 1.23 | 1177 | 744 | 0.69 | 11.31 |
| 8# | | | 37.15 | 50.20 | 34.57 | 15.63 | 0.59 | 1.50 | 1434 | 1246 | 1.33 | 13.05 |
| 1# | 0.78 | 34.75 | 37.23 | 48.47 | 34.64 | 13.83 | 0.69 | 0.88 | 1688 | 2014 | 0.96 | 11.24 |
| 2# | | | 37.51 | 54.60 | 34.64 | 19.96 | 0.99 | 1.27 | 2436 | 2029 | 0.97 | 17.09 |
| 3# | | 34.60 | 37.28 | 49.90 | 34.64 | 15.26 | 0.76 | 0.97 | 1863 | 2165 | 1.03 | 12.62 |
| 4# | | | 37.57 | 44.70 | 34.64 | 10.06 | 0.50 | 0.64 | 1228 | 1793 | 0.86 | 7.13 |
| 5# | | 34.50 | 37.67 | 52.30 | 34.64 | 17.66 | 0.88 | 1.13 | 2156 | 2197 | 1.05 | 14.63 |
| 6# | | | 37.64 | 42.90 | 34.64 | 8.26 | 0.41 | 0.53 | 1008 | 2144 | 1.02 | 5.26 |
| 7# | | 34.70 | 37.02 | 52.70 | 34.64 | 18.06 | 0.90 | 1.15 | 2204 | 1729 | 0.83 | 15.68 |
| 8# | | | 38.08 | 56.80 | 34.64 | 22.16 | 1.10 | 1.42 | 2705 | 2679 | 1.28 | 18.72 |
| 1# | 1.18 | 34.75 | 38.06 | 50.85 | 34.59 | 16.26 | 1.03 | 0.87 | 2517 | 2835 | 0.93 | 12.79 |
| 2# | | | 38.42 | 57.90 | 34.59 | 23.31 | 1.47 | 1.25 | 3608 | 2893 | 0.95 | 19.48 |
| 3# | | 34.50 | 38.13 | 53.40 | 34.59 | 18.81 | 1.19 | 1.01 | 2911 | 3235 | 1.07 | 15.27 |
| 4# | | | 38.57 | 47.70 | 34.59 | 13.11 | 0.83 | 0.70 | 2029 | 2735 | 0.90 | 9.13 |
| 5# | | 34.50 | 38.70 | 55.30 | 34.59 | 20.71 | 1.31 | 1.11 | 3205 | 3090 | 1.02 | 16.60 |
| 6# | | | 38.39 | 44.20 | 34.59 | 9.61 | 0.61 | 0.51 | 1488 | 3030 | 1.00 | 5.81 |
| 7# | | 34.60 | 37.82 | 56.20 | 34.59 | 21.61 | 1.37 | 1.16 | 3345 | 2709 | 0.89 | 18.38 |
| 8# | | | 38.96 | 60.60 | 34.59 | 26.01 | 1.64 | 1.39 | 4026 | 3754 | 1.24 | 21.64 |
| 1# | 1.57 | 34.78 | 38.73 | 52.36 | 34.62 | 17.74 | 1.38 | 0.88 | 3391 | 3726 | 0.93 | 13.63 |
| 2# | | | 39.17 | 58.90 | 34.62 | 24.28 | 1.89 | 1.21 | 4641 | 3814 | 0.95 | 19.73 |
| 3# | | 34.50 | 38.88 | 55.60 | 34.62 | 20.98 | 1.64 | 1.04 | 4010 | 4227 | 1.05 | 16.72 |
| 4# | | | 39.12 | 49.40 | 34.62 | 14.78 | 1.15 | 0.73 | 2825 | 3856 | 0.96 | 10.28 |
| 5# | | 34.50 | 39.43 | 55.50 | 34.62 | 20.88 | 1.63 | 1.04 | 3991 | 4007 | 1.00 | 16.07 |
| 6# | | | 38.99 | 49.40 | 34.62 | 10.38 | 0.81 | 0.52 | 1984 | 3883 | 0.97 | 6.01 |
| 7# | | 34.70 | 38.60 | 58.40 | 34.62 | 23.78 | 1.86 | 1.18 | 4545 | 3766 | 0.94 | 19.80 |
| 8# | | | 39.65 | 62.80 | 34.62 | 28.18 | 2.20 | 1.40 | 5386 | 4839 | 1.21 | 23.15 |
| 1# | 1.96 | 34.80 | 39.19 | 52.99 | 34.58 | 18.42 | 1.71 | 0.87 | 4179 | 4671 | 0.94 | 13.80 |
| 2# | | | 39.92 | 60.10 | 34.58 | 25.53 | 2.36 | 1.21 | 5792 | 4637 | 0.93 | 20.18 |
| 3# | | 34.40 | 39.27 | 56.80 | 34.58 | 22.23 | 2.06 | 1.05 | 5043 | 4935 | 0.99 | 17.53 |
| 4# | | | 40.54 | 51.20 | 34.58 | 16.63 | 1.54 | 0.79 | 3773 | 5482 | 1.10 | 10.66 |
| 5# | | 34.40 | 39.74 | 55.70 | 34.58 | 21.13 | 1.96 | 1.00 | 4794 | 4686 | 0.94 | 15.96 |

| | | | | | | | | | | | | |
|---|---|---|---|---|---|---|---|---|---|---|---|---|
| 6# | | | 39.35 | 45.50 | 34.58 | 10.93 | 1.01 | 0.52 | 2479 | 4663 | 0.94 | 6.15 |
| 7# | | 34.70 | 39.17 | 59.80 | 34.58 | 25.23 | 2.34 | 1.19 | 5724 | 4834 | 0.97 | 20.63 |
| 8# | | | 40.54 | 63.80 | 34.58 | 29.23 | 2.71 | 1.38 | 6632 | 5950 | 1.19 | 23.26 |

According to the mathematical model analysis of the weighing sensor data calculation results in FIG. 3, the lower limit and upper limit of the stress ratio were 0.69 and 1.33 respectively at 0.39 MPa, the lower limit and lower limit of the stress ratio were 0.89 and 1.24 respectively at 1.18 MPa, and the lower limit and lower limit of the stress ratio were 0.95 and 1.10 respectively at 3.92 MPa, indicating that the stress ratio converges in a centralized manner with the increase of specific pressure.

As shown in FIG. 4, under the same conditions, stress ratio of the 4# test thrust pad subjected to stress calculation was 0.77 at 3.92 MPa, while the weighing stress ratio was 1.09. The weighing stress ratio was calculated based on the value of the weighing sensor. The weighing sensor was installed below the support bolt of the thrust pad to directly measure the actual stress of each thrust pad. Therefore, the actual stress ratio of the 4 # thrust pad was 1.09. The lubrication stress ratio is closely related to the oil film temperature, oil film thickness, and friction and wear states. The differences in factors of a plastic thrust pad such as the elastic modulus, the flatness of a runner plate, and the tilting angle of a support structure, might affect the operating state, oil film formation, and friction state of each thrust pad, thus resulting in differences in the oil film temperature of each thrust pad. Therefore, the stress ratio of the 4 # thrust pad in the lubrication state was 0.77, which actually reflects the lubrication stress state of a single thrust pad surface.

Table 2-2 Parameters and stress ratios of a hydroelectric generator unit simulated by elastic metallic plastic during operation

| Number of pads | Specific pressure MPa | Oil input temperature °C | Pad body temperature °C | Oil film temperature °C | Average oil film temperature °C | Stress temperature °C | Specific pressure of stress of a single pad | Ratio of stress of a single pad | Stress of a single pad | Value of weighing sensor | Ratio of stress of a single pad calculated | *MT* value °C |
|---|---|---|---|---|---|---|---|---|---|---|---|---|
| 1# | 2.35 | 34.75 | 39.74 | 53.75 | 34.49 | 19.26 | 2.04 | 0.87 | 4994 | 5698 | 0.95 | 14.01 |
| 2# | | | 40.54 | 60.40 | 34.49 | 25.91 | 2.74 | 1.17 | 6718 | 5573 | 0.93 | 19.86 |
| 3# | | 34.10 | 39.84 | 58.20 | 34.49 | 23.71 | 2.51 | 1.07 | 6148 | 5993 | 1.00 | 18.36 |
| 4# | | | 40.98 | 52.20 | 34.49 | 17.71 | 1.87 | 0.80 | 4592 | 6537 | 1.09 | 11.22 |
| 5# | | 34.40 | 40.18 | 56.70 | 34.49 | 22.21 | 2.35 | 1.00 | 5759 | 5701 | 0.95 | 16.52 |
| 6# | | | 39.81 | 46.00 | 34.49 | 11.51 | 1.22 | 0.52 | 2985 | 5608 | 0.93 | 6.19 |
| 7# | | 34.70 | 39.53 | 60.90 | 34.49 | 26.41 | 2.80 | 1.19 | 6848 | 5861 | 0.98 | 21.37 |
| 8# | | | 41.39 | 65.40 | 34.49 | 30.91 | 3.27 | 1.39 | 8015 | 7030 | 1.17 | 24.01 |
| 1# | 2.74 | 34.78 | 40.23 | 54.40 | 34.52 | 19.88 | 2.35 | 0.86 | 5748 | 6628 | 0.96 | 14.17 |

| | | | | | | | | | | | | | |
|---|---|---|---|---|---|---|---|---|---|---|---|---|---|
| 2# | | | 41.03 | 61.80 | 34.52 | 27.28 | 3.22 | 1.17 | 7888 | 6493 | 0.94 | 20.77 |
| 3# | | 34.20 | 40.45 | 59.50 | 34.52 | 24.98 | 2.95 | 1.08 | 7223 | 6938 | 1.00 | 19.05 |
| 4# | | | 41.34 | 52.90 | 34.52 | 18.38 | 2.17 | 0.79 | 5314 | 7510 | 1.08 | 11.56 |
| 5# | | 34.40 | 40.56 | 57.80 | 34.52 | 23.28 | 2.75 | 1.00 | 6731 | 6616 | 0.95 | 17.24 |
| 6# | | | 40.25 | 46.60 | 34.52 | 12.08 | 1.43 | 0.52 | 3493 | 6514 | 0.94 | 6.35 |
| 7# | | 34.70 | 39.94 | 61.90 | 34.52 | 27.38 | 3.23 | 1.18 | 7916 | 6817 | 0.98 | 21.96 |
| 8# | | | 42.20 | 66.90 | 34.52 | 32.38 | 3.82 | 1.39 | 9362 | 7982 | 1.15 | 24.70 |
| 1# | 3.14 | 34.75 | 40.41 | 54.42 | 34.44 | 19.98 | 2.53 | 0.81 | 6207 | 7592 | 0.96 | 14.01 |
| 2# | | | 41.26 | 63.80 | 34.44 | 29.36 | 3.72 | 1.19 | 9121 | 7494 | 0.94 | 22.54 |
| 3# | | 34.10 | 41.06 | 60.80 | 34.44 | 26.36 | 3.34 | 1.06 | 8189 | 7910 | 1.00 | 19.74 |
| 4# | | | 41.73 | 53.80 | 34.44 | 19.36 | 2.46 | 0.78 | 6015 | 8559 | 1.08 | 12.07 |
| 5# | | 34.30 | 40.88 | 59.50 | 34.44 | 25.06 | 3.18 | 1.01 | 7785 | 7583 | 0.96 | 18.62 |
| 6# | | | 40.98 | 47.30 | 34.44 | 12.86 | 1.63 | 0.52 | 3996 | 7529 | 0.95 | 6.32 |
| 7# | | 34.60 | 40.51 | 65.00 | 34.44 | 30.56 | 3.88 | 1.23 | 9494 | 7739 | 0.98 | 24.49 |
| 8# | | | 43.21 | 69.00 | 34.44 | 34.56 | 4.38 | 1.40 | 10736 | 9068 | 1.14 | 25.79 |
| 1# | 3.53 | 34.80 | 40.62 | 55.31 | 34.28 | 21.04 | 2.85 | 0.81 | 6973 | 8627 | 0.96 | 14.69 |
| 2# | | | 41.70 | 65.40 | 34.28 | 31.13 | 4.21 | 1.19 | 10318 | 8571 | 0.96 | 23.70 |
| 3# | | 33.70 | 41.26 | 61.60 | 34.28 | 27.33 | 3.70 | 1.05 | 9058 | 8812 | 0.98 | 20.34 |
| 4# | | | 41.94 | 54.50 | 34.28 | 20.23 | 2.74 | 0.78 | 6705 | 9715 | 1.08 | 12.56 |
| 5# | | 34.20 | 41.08 | 60.90 | 34.28 | 26.63 | 3.60 | 1.02 | 8826 | 8591 | 0.96 | 19.82 |
| 6# | | | 41.39 | 47.80 | 34.28 | 13.53 | 1.83 | 0.52 | 4484 | 8506 | 0.95 | 6.41 |
| 7# | | 34.40 | 40.72 | 66.70 | 34.28 | 32.43 | 4.39 | 1.24 | 10749 | 8821 | 0.98 | 25.98 |
| 8# | | | 44.17 | 70.70 | 34.28 | 36.43 | 4.39 | 1.40 | 12075 | 10091 | 1.13 | 26.53 |
| 1# | 3.92 | 34.93 | 41.21 | 55.93 | 34.33 | 21.60 | 3.16 | 0.81 | 7752 | 9641 | 0.97 | 14.72 |
| 2# | | | 41.83 | 66.60 | 34.33 | 32.27 | 4.73 | 1.21 | 11581 | 9589 | 0.97 | 24.77 |
| 3# | | 33.60 | 41.76 | 62.00 | 34.33 | 27.67 | 4.05 | 1.03 | 9930 | 9623 | 0.97 | 20.24 |
| 4# | | | 42.43 | 54.90 | 34.33 | 20.57 | 3.01 | 0.77 | 7382 | 10795 | 1.09 | 12.47 |
| 5# | | 34.30 | 41.65 | 61.70 | 34.33 | 27.37 | 4.01 | 1.02 | 9822 | 9519 | 0.96 | 20.05 |
| 6# | | | 42.20 | 48.30 | 34.33 | 13.97 | 2.05 | 0.52 | 5013 | 9423 | 0.95 | 6.10 |
| 7# | | 34.50 | 41.13 | 67.80 | 34.33 | 33.47 | 4.90 | 1.25 | 12012 | 9855 | 0.99 | 26.67 |
| 8# | | | 45.56 | 71.50 | 34.33 | 37.17 | 5.44 | 1.39 | 13340 | 10958 | 1.10 | 25.94 |

In summary, stress calculation is the first proposed method to calculate the operating state of a thrust bearing. It is theoretically feasible and needs to be verified. The weighing sensor is usually used to measure the stress, so the weighing calculation method is used to verify. With reference to FIG. 2, FIG. 3, and FIG. 4, it can be seen that under the same conditions, the stress ratios of thrust pads calculated based on the stress calculation and weighing calculation basically tended to be consistent and were relatively parallel.

The variation trend of stress calculation is superior to that of weighing calculation. Since the fact that the oil film temperature of stress calculation is theoretical maximum temperature of the thrust pad surface rather than the average oil film temperature of the thrust pad surface, the stress calculation is derived based on temperature parameters and is related to the operating state of the thrust pad, oil film formation and friction state of the generator unit during operation. The differences in factors of a plastic thrust pad such as the elastic modulus, the flatness of the thrust flange (runner plate), and the tilting angle, might affect the operating state, oil film formation, and friction state of each thrust pad. Therefore, the stress ratio is related to the operating state of the thrust pad (lubrication, boundary lubrication). Under the condition that the total bearing capacity of the whole set of thrust pads is unchanged, the oil film temperatures of thrust pads are different and the stress distribution is decentralized. Therefore, the stress calculation method is more conducive to the construction of a mathematical model and early diagnosis of thrust pads, providing support for the intelligent operation and maintenance and state overhaul of the generator unit.

**Embodiment** 2 Establishing a dynamic operating standard involving red, yellow, and green level for a simulated generator unit

2.1 A test bench was equipped with 6 pieces per set of Babbitt thrust pads (210 $cm^2$/piece, rigid support). A pad body temperature sensor and an oil film temperature sensor were installed on each of 1# - 6# test thrust pads, an oil input temperature sensor was installed on each of 2#, 4#, and 6# test thrust pads, and an oil groove temperature sensor was installed in the middle of the oil groove. The thrust pads were installed in accordance with the Thrust Bearing Installation Standard, and acceptance results show that the thrust pads were qualified. The simulated linear velocity and specific pressure of the hydroelectric generator unit under the high-speed and heavy-load operating conditions were 26.8 m/s and 4.50 MPa, respectively. Under full-load operating conditions, the cooling water flow and lubricating oil flow were controlled to make the oil groove temperature reach 35°C, 40°C, 45°C, 50°C, 55°C, 60°C, 65°C, 70°C, and 75°C, respectively. The parameters were recorded after stable operation for 1h.

Taking the stress ratio as the ordinate and the load (specific pressure), temperature, oil film thickness, MT value and the like as the abscissa, a mathematical model was established. The operating state of each thrust pad was calculated by means of substituting the operating state change data of each thrust pad under different working conditions into the calculation method, and the model (red, yellow and green) for analyzing the operating states of thrust pads was established, as shown in FIG. 5.

The Babbitt thrust pads were operated at a linear velocity of 26.8 m/s and a specific pressure of 4.50 MPa under extreme high temperature conditions. When the oil groove temperature was about 35-50°C, the stress of each thrust tended to be stable, indicating that green operation is achieved. After the oil input temperature reached about 50°C, the stress ratio of the 4# test thrust pad showed a downward trend, which reduces from 0.97 at the oil input temperature of about 50°C to 0.92 at the oil input temperature of about 60°C. After the oil input temperature reached about 60°C, the stress ratio of the 6# test thrust pad also decreased. Therefore, the operating state was yellow when the oil groove temperature was about 50-60°C, and was red when the oil groove temperature was higher than 60°C. The torque changed when the oil input temperature was about 75°C. At this time, $MT_{limit}=MT_4$=6.9°C. An operating standard (red, yellow, and green levels) of thrust pads was established according to the simulation tests and mathematical model analysis, and a new standard of the oil film temperature was established according to the pad body temperature, as shown in Table 3.

Table 3 Operating standard for Babbitt thrust pads

| Operating state | Oil input temperature °C | Pad body temperature °C | Oil film temperature °C |
|---|---|---|---|
| Green, healthy | Below 50 | Below 80 | Below 95 |
| Yellow, sub-healthy | 50-60 | 80-88 | 95-100 |
| Red | 60 | 88 | 100 |

Comparing this standard to the existing standard (giving an alarm when the pad body temperature reaching 80°C, and being shut down when the pad body temperature reaching 85°C) of operating state of thrust pads of some hydroelectric generator units, the hydroelectric generator unit give an alarm when the oil temperature is 95-100 °C and is shut down when the oil temperature is 100 °C. (Note: The threshold temperatures, corresponding to red, yellow, and green level, for different generator units should be different. The temperatures set for this simulation test are higher than the actual operating temperatures of generator units, since the actual operation of the generator units requires a certain safety margin, which can be adjusted appropriately.)

2.2 A test bench was equipped with 6 pieces per set of elastic metallic plastic thrust pads (210 $cm^2$/piece, rigid support). A pad body temperature sensor and an oil film temperature sensor were installed on each of 1# - 6# test thrust pads, an oil input temperature sensor was installed on each of 2#, 4#, and 6# test thrust pads, and an oil groove temperature sensor was installed in the middle of the oil groove. The thrust pads were installed in accordance with the Thrust Bearing Installation Standard, and acceptance results show that the thrust pads were qualified. The simulated linear velocity and specific pressure of the hydroelectric generator unit under the high-speed and heavy-load operating conditions were 26.8 m/s and 4.50 MPa, respectively. Under full-load operating conditions, the cooling water flow and lubricating oil flow were controlled to make the oil groove temperature reach 35°C, 35°C, 40°C, 45°C, 50°C, 55°C, 60°C, 65°C, 70°C, 75°C, and 80°C respectively (shut down when the torque changed). The parameters were recorded after stable operation for 1h at each level. The model (red, yellow and green) for analyzing the operating state of thrust pads was established, as shown in FIG. 5.

The elastic metallic plastic thrust pads were operated at a linear velocity of 26.8 m/s and a specific pressure of 4.50 MPa, and the torque changed when the oil input temperature reached about 75°C, reaching extreme operation and $MT_{limit}$=$MT_4$ =19.4°C. At this time, the stress ratio of the 4# test thrust pad was 0.96, which is determined to be the standard for shutdown of red level. When the oil input temperature was 35-75°C, the stress on the thrust pads fluctuated slightly but tended to be consistent overall, *MT*=20.3-38°C> $MT_{limit}$, indicating that the thrust pads were in a green and healthy operating state. Although there were no operating state of yellow level in this test, the operating state of yellow level caused by changes in *MT* value and abnormal stress ratios of the thrust pads will still possible under actual working conditions. An operating standard (red, yellow, and green levels) of elastic metallic plastic thrust pads was established according to the simulation test results, and a new standard of the oil film temperature was established according to the pad body temperature, as shown in Table 4.

The operating standard (red, yellow, and green levels) of generator units should be improved in the actual application. Since differences in thrust pad materials or differences in old and new degrees of the generator units or differences in the stress applied on the installed thrust pads, it is necessary to work with the owner and user units (industry experts) to develop personalized bearing operation standard according to actual conditions, in addition to the standard for monitoring running states (green level indicating "healthy", yellow level indicating "sub-healthy, to be checked or inspected", and red level indicating "alarm giving and halt").

Table 4 Operating standard for elastic metallic plastic thrust pads

| Operating state | Oil input temperature °C | Pad body temperature °C | Oil film temperature °C |
|---|---|---|---|
| Green, healthy | Below 75 | Below 85 | Below 105 |
| Red, alarm giving | 75 | 85 | 105 |

This test standard exceeds the existing standard (giving an alarm when the pad body temperature reaching 65°C) of operating state of thrust pads of some hydroelectric generator units. According to the established new operating standard of hydroelectric generator units using elastic metallic plastic thrust pads, an alarm is given when the oil input temperature reaches 75°C or the oil film temperature reaches 105°C. (Note: The threshold temperatures, corresponding to red, yellow, and green level, for different generator units should be different. The temperatures set for this simulation test are higher than the actual operating temperatures of generator units, since the actual operation of the generator units requires a certain safety margin, which can be adjusted appropriately.)

**Embodiment** 3 Analysis of the influence of high-pressure oil holes on the operating state of the elastic metallic plastic thrust pads according to the model

When using Babbitt thrust pads for a large-scale generator unit, a high-pressure oil jacking device is configured to lift the runner plate during startup and shutdown processes, so that an oil film is formed on the surface of the thrust pads to prevent occurrence of any thrust pad burning accident caused by semi-dry friction between the thrust pads and the runner plate. Some generator units still retain the design of high-pressure oil jacking device on the thrust pad surface after the Babbitt thrust pads are replaced by elastic metallic plastic thrust pads. Since the elastic metallic plastic thrust pads have excellent anti-friction and self-lubricating properties, high-pressure oil jacking is not required. Therefore, the impact of the thrust pad surface with high-pressure oil holes on the state of the lubricating oil film during operation of the thrust pads is worthy of study. In the embodiment 3, a mathematical model analysis method is used to investigate the influence of the presence or absence of high-pressure oil holes on the operating state of the elastic metallic plastic thrust pads.

Types of test thrust pads:

1) 8 pieces per set of conventional elastic metallic plastic thrust pads were used for test (210 $cm^2$/piece, rigid support), a pad body temperature sensor and an oil film temperature sensor were installed on each of the thrust pads, and an oil input temperature sensor was installed on each of 1#, 3#, 5#, 7# test thrust pads;
2) 8 pieces per set of elastic metallic plastic thrust pads with high-pressure oil holes were used for test (210 $cm^2$/piece, rigid support), a pad body temperature sensor and an oil film temperature sensor were installed on each of the thrust pads, and an oil input temperature sensor was installed on each of 1#, 3#, 5#, and 7# test thrust pads.

The two kinds of test thrust pads were installed in accordance with the Thrust Bearing Installation Standard, and then tested after qualified acceptance. The oil input temperature was controlled to be about 40°C, a test machine was started to operate under working conditions of low-speed and heavy-load of a gearbox, the rotation speed was set to be 1.88 m/s, and the specific pressure was loaded to 2.28 MPa, 3.42 MPa, 4.56 MPa, and 5.76 MPa respectively. The parameters were recorded after stable operation for 1h at each level, and mathematical model analysis was performed on the test results, as shown in FIGs. 7 and 8.

The torque of each of the conventional elastic metallic plastic thrust pads for test did not fluctuate during the operation, and the temperature differences of the pad bodies conforms to the existing standard. According to the mathematical model analysis in FIG. 7, each thrust pad for test was in a good operating state under different specific pressure conditions, and the stress was stable. In the process of changing of specific pressure from 2.28 MPa to 4.56 MPa, $MT_{min}$ values were 3.6°C, 4.1°C, and 4.7°C, respectively. At specific pressure of 5.76 MPa, $MT_{min}$=$MT_1$=$MT_6$=5.7, the stress ratio of the 6# test thrust pad was 0.82, and the mathematical model results show the data of the thrust pad was stable, which was in a green operation.

The torque and power of the elastic metallic plastic test thrust pads with high-pressure oil holes fluctuated at the specific pressure of 5.76 MPa. Throughout the operation, the temperature differences of the pad bodies were small, indicating that the thrust pads were in a good operation according to the existing standard. However, according to the mathematical model as shown in FIG. 8, the stress applied on the 6# test thrust pad was relatively small; $MT_6$ values were 0.7°C, 0.8°C, and 0.9°C (< 1°C) respectively at the specific pressures from 2.28 MPa to 4.56 MPa, the torque changed at the specific pressure of 5.76 MPa, $MT_{limit}$=$MT_6$ =0.7°C< 1°C, and the stress ratio of the thrust pad was 0.45, which was abnormal as shown in the mathematical model mathematical model, indicating that the 6# test thrust pad was always in the state of red alarm given for poor boundary lubrication, which mainly because the high-pressure oil holes destroyed the formation of the lubricating oil film.

Explanation of terms in this embodiment:

1. Stress temperature: also called "oil film stress temperature" or "single pad stress temperature", refers to the difference between the oil film temperature of a single pad and the average oil input temperature (or oil groove temperature) of the thrust pads. (Creative term)
2. Average stress temperature: also called "average bearing stress temperature", refers to the average stress temperature of the whole set of thrust pads. (Creative term)
3. Ratio of stress of a single pad: refers to the ratio of the single pad stress temperature to the average stress temperature of the whole set of thrust pads, also the ratio of the specific pressure of stress of a single pad to the average specific pressure of stress of the thrust pads. (Creative term)
4. Specific pressure of stress of a thrust pad: refers to the stress of each thrust pad, which can be expressed by specific pressure (MPa), load (KN) or mass (kg). (Creative term)
5. Average specific pressure of stress: refers to the average stress loaded on the whole set of thrust pads, which can be expressed by specific pressure (MPa), load (KN) or mass (kg). (Creative term)
6. Oil input temperature: refers to the lubricating oil temperature at the oil input end of a thrust pad.
7. *MT* value: refers to the difference between the oil film temperature of a single pad and the pad body temperature of a single pad. (Creative term)
8. $MT_{limit}$: refers to the $MT_{min}$ value when the friction torque fluctuates. (Creative term)
9. Operating standard of red level: identified as when the friction torque changes or whern the stress state curves of two or more thrust pads change downwards under high-speed and heavy-load conditions or the $MT_{limit}$ appears under low-speed and heavy-load conditions. (Creative term)
10. Operating standard of yellow level: identified as when the stress state curve of one thrust pad changes downwards. (Interpreted in a new way)
11. Operating standard of green level: identified as when the stress state curves of all the thrust pads tend to be stable. (Interpreted in a new way)

Finally, it should be noted that the above embodiments are only used to illustrate the technical solutions of the present invention, but not to limit them; although the present invention has been described in detail with reference to the foregoing embodiments, those ordinarily skilled in the art should understand that: the technical solutions described in the foregoing embodiments can still be modified, or some or all of the technical features thereof can be equivalently replaced; and these modifications or replacements do not make the essence of the corresponding technical solutions deviate from the scope of the technical solutions of the embodiments of the present invention.

## Claims

**1.** A method for calculating an operating state of a thrust bearing on basis of oil film stress temperatures, comprising the following steps of:

S1: by means of installing a pad body oil input temperature sensor and/or an oil groove temperature sensor, an oil film temperature sensor, and a pad body temperature sensor on each thrust pad, acquiring real-time data of each thrust pad during operation of a generator unit, including a pad body oil input temperature and/or oil groove temperature, an oil film temperature, and a pad body temperature;
S2: calculating an average oil input temperature, an oil film stress temperature, an average bearing stress temperature, and a ratio of stress on a single pad of the thrust bearing according to the oil input temperature and oil film temperature of each thrust pad during the operation of the generator unit, and calculating a difference value MT between the oil film temperature and the pad body temperature according to the oil film temperature of a single pad and the pad body temperature of the single pad;
S3: obtaining an average specific pressure of stress of the thrust pads according to a loading specific pressure during the operation of the generator unit;
S4: obtaining a specific pressure of stress of each thrust pad according to the average specific pressure of stress of the thrust pads and the ratio of stress of a single pad; and
S5: establishing a dynamic operating standard and a mathematical model for the thrust bearing of the generator unit according to the stress states and MT values of thrust pads subject to different stress distributions in the life cycle under the operating conditions of the thrust bearing, monitoring an operating state of the thrust bearing in real time based on the established model, and performing automatic diagnosis and analysis of the operating state of the generator unit.

**2.** The method for calculating an operating state of a thrust bearing on basis of oil film stress temperatures according to claim 1, wherein the average oil input temperature of the thrust bearing is calculated according to the following equation:

$$\bar{T_i} = \frac{T_{i,a} + T_{i,b} + T_{i,c} + \ldots + T_{i,j}}{m}$$

wherein $T_i$ is the average oil input temperature of a thrust bearing with the unit of °C, $T_{i,b}$, $T_{i,c} \ldots T_{i,j}$ are the oil input temperatures of thrust pads installed with oil input temperature sensors with the unit of °C, wherein *a, b, c... j* are the numbers of the thrust pads installed with oil input temperature sensors, *m* is a number of the oil input temperature sensors; if the oil input temperature sensor is not installed, the average oil input temperature is substituted by the oil groove temperature.

**3.** The method for calculating an operating state of a thrust bearing on basis of oil film stress temperatures according to claim 1, wherein the oil film stress temperature is calculated according to the following equation:

$$T_{s,x} = T_{o,x} - \bar{T_i}$$

wherein $T_{s,x}$ is a single pad stress temperature of a thrust pad numbered x with the unit of °C, $T_{o,x}$ is an oil film temperature of a thrust pad numbered x with the unit of °C, $\overline{T}_i$ is the average oil input temperature of the thrust bearing with the unit of °C, and x is a thrust pad number being 1, 2, 3... n.

**4.** The method for calculating an operating state of a thrust bearing on basis of oil film stress temperatures according to claim 3, wherein the average bearing stress temperature is calculated according to the following equation:

$$\bar{T_s} = \frac{\sum_1^n T_{s,x}}{n}$$

wherein $\overline{T}_s$ is the average bearing stress temperature with the unit of °C, $T_{s,x}$ is the single pad stress temperature of a thrust pad numbered x with the unit of °C, *n* is a number of thrust pads employed in the thrust bearing, and x is the thrust pad number being 1, 2, 3 ... n.

**5.** The method for calculating an operating state of a thrust bearing on basis of oil film stress temperatures according to claim 4, wherein the ratio of stress of a single pad is calculated according to the following equation:

$$t_{s,x} = \frac{T_{s,x}}{\overline{T_s}}$$

wherein $t_{s,x}$ is a ratio of stress on a single pad numbered x, $T_{s,x}$ is the single pad stress temperature of a thrust pad numbered x with the unit of °C, $\overline{T}_s$ is the average bearing stress temperature with the unit of °C, and x is the thrust pad number being 1 , 2, 3 ... n.

**6.** The method for calculating an operating state of a thrust bearing on basis of oil film stress temperatures according to claim 5, wherein the specific pressure of stress of a single pad is calculated according to the following equation:

$$P_x = \overline{P} * t_{s,x}$$

wherein $P_x$is the specific pressure of stress of a single pad numbered x with the unit of MPa, P is the average specific pressure of stress of the thrust pads with the unit of MPa, $t_{s,x}$ is the ratio of stress of a single pad numbered x, and x is the thrust pad number being 1, 2, 3 ... n.

**7.** The method for calculating an operating state of a thrust bearing on basis of oil film stress temperatures according to claim 6, wherein the difference value *MT* between the oil film temperature and the pad body temperature is calculated according to the following equation:

$$MT_x = T_{o,x} - T_{p,x}$$

$$MT_{limit} = MT_{min}$$

wherein $MT_x$ is the difference value between the oil film temperature and the body temperature of a thrust pad numbered x with the unit of °C, $T_{o,x}$ is the oil film temperature of a thrust pad numbered x with the unit of °C, $T_{p,x}$ is a pad body temperature of a thrust pad numbered x with the unit of °C, x is the thrust pad number being 1, 2, 3 ... n, $MT_{min}$ is the minimum $MT_x$ with the unit of °C, and $MT_{limit}$ is the $MT_{min}$ when the friction torque changes.

**8.** The method for calculating an operating state of a thrust bearing on basis of oil film stress temperatures according to claim 7, wherein the operating standard for the thrust bearing is divided into three levels as red, yellow, and green according to the ratio of stress of a single pad, a variation ratio of the established standard, and the *MT* value, wherein, on basis of a mathematic model established by simulating realistic and extreme working conditions through a simulation test bench, the red level is defined as when the friction torque changes or when stress state curves of two or more thrust pads change downwards under high-speed and heavy-load conditions or the $MT_{limit}$ appears under low-speed and heavy-load conditions, the yellow level is defined as when the stress state curve of one thrust pad changes downwards, and the green level is defined as when the stress state curves of all the thrust pads tend to be stable.

**9.** A system for calculating an operating state of a thrust bearing on basis of oil film stress temperatures, comprising:

a data acquisition device comprising a pad body oil input temperature sensor and/or an oil groove temperature sensor, an oil film temperature sensor, and a pad body temperature sensor installed on each thrust pad, further comprising a signal acquisition module for the said sensors, an upper industrial computer, and a data display software interface, which are configured to acquire the oil input temperature and/or oil groove temperature, oil film temperature, and pad body temperature of each thrust pad during operation of a generator unit;
a data calculation unit configured to calculate the average oil input temperature, oil film stress temperature, average bearing stress temperature, and ratio of stress on a single pad of each thrust pad according to the acquired data, to calculate the difference value *MT* between the oil film temperature and the pad body temperature according to the oil film temperature of a single pad and the pad body temperature of a single pad, to obtain the average specific pressure of stress of the thrust pads according to the loading specific pressure during the operation of the generator unit, and to obtain the specific pressure of stress of each thrust pad according to the average specific pressure of stress of the thrust pads and the ratio of stress of a single pad;
a data analysis unit configured to establish a model based on the calculated values and perform automatic diagnosis and analysis of the operating state of the generator unit according to a preset standard; and
wherein, the preset standard is as follows: based on the existing bearing installation standards, a dynamic operating standard is established for the stress state of a thrust bearing, which is divided into three levels as red, yellow, and green according to the ratio of stress of a single pad, the variation ratio of the established standard, and the *MT* value, wherein, on basis of mathematic model established by simulating realistic and extreme working conditions through a simulation test bench, the red level is defined as when the friction torque changes or when stress curves of two or more thrust pads change downwards under high-speed and heavy-load conditions or the $MT_{limit}$ appears under low-speed and heavy-load conditions, the yellow level is defined as when the stress state curve of one thrust pad changes downwards, and the green level is defined as when the stress state curves of all the thrust pads tend to be stable.

**10.** The system for calculating an operating state of a thrust bearing on basis of oil film stress temperatures according to claim 9, wherein the data acquisition device further comprises a weighing sensor, which is configured to verify the bearing stress state calculated through stress temperature; a customized bearing operating standard is established since differences in thrust pad materials used for different generator units or differences in old and new degrees of the generator units or differences in stress applied on the thrust pads during installation; by means of integrating operating data about the thrust bearing of the generator unit through the system and transforming the operating data into a logical calculation equation according to the operating standard, a bearing stress analysis model is established as the basis for building a sliding bearing operation and maintenance platform.

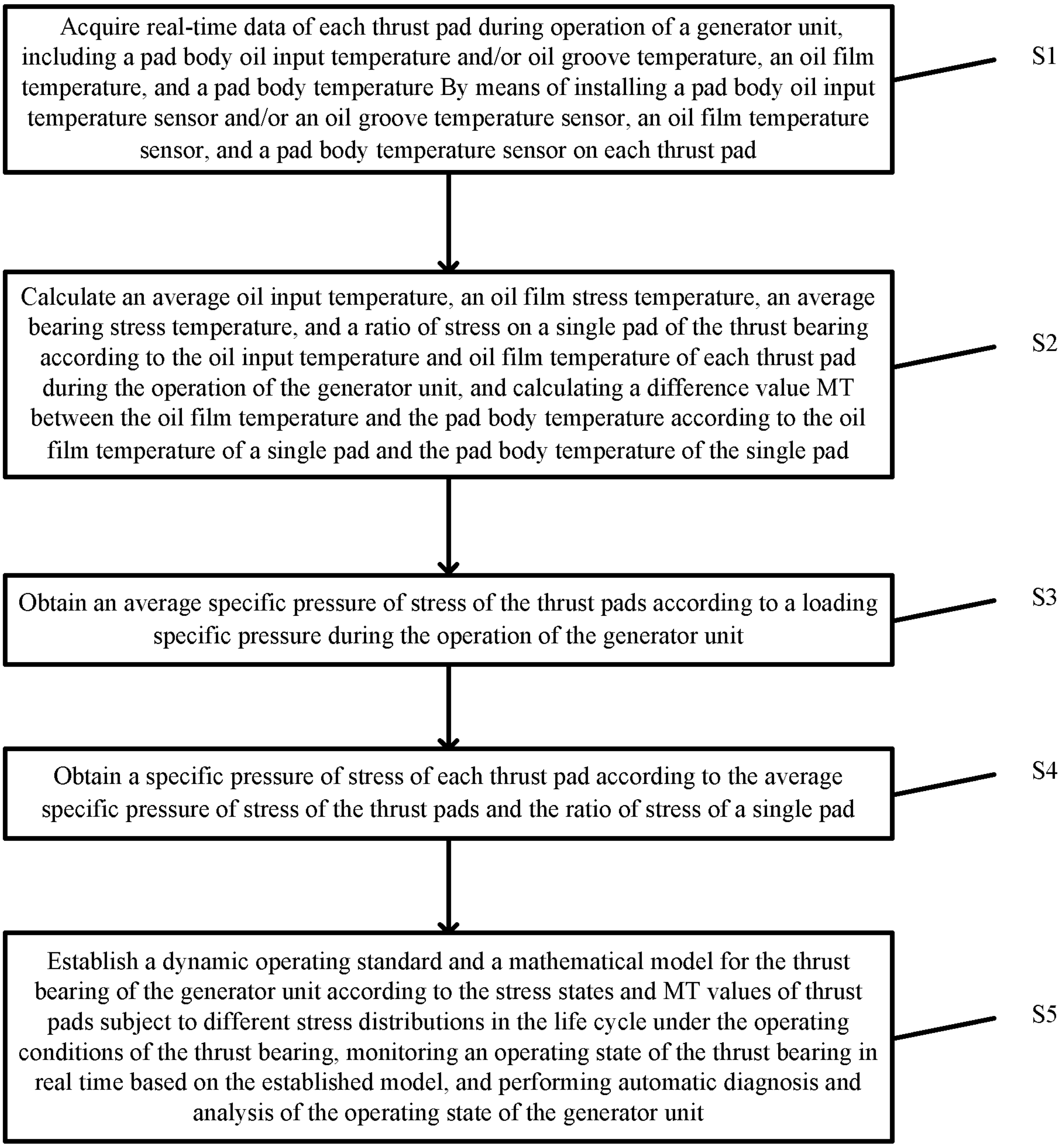
Acquire real-time data of each thrust pad during operation of a generator unit, including a pad body oil input temperature and/or oil groove temperature, an oil film temperature, and a pad body temperature By means of installing a pad body oil input temperature sensor and/or an oil groove temperature sensor, an oil film temperature sensor, and a pad body temperature sensor on each thrust pad
S1
Calculate an average oil input temperature, an oil film stress temperature, an average bearing stress temperature, and a ratio of stress on a single pad of the thrust bearing according to the oil input temperature and oil film temperature of each thrust pad during the operation of the generator unit, and calculating a difference value MT between the oil film temperature and the pad body temperature according to the oil film temperature of a single pad and the pad body temperature of the single pad
S2
Obtain an average specific pressure of stress of the thrust pads according to a loading specific pressure during the operation of the generator unit
S3
Obtain a specific pressure of stress of each thrust pad according to the average specific pressure of stress of the thrust pads and the ratio of stress of a single pad
S4
Establish a dynamic operating standard and a mathematical model for the thrust bearing of the generator unit according to the stress states and MT values of thrust pads subject to different stress distributions in the life cycle under the operating conditions of the thrust bearing, monitoring an operating state of the thrust bearing in real time based on the established model, and performing automatic diagnosis and analysis of the operating state of the generator unit
S5

**FIG. 1**

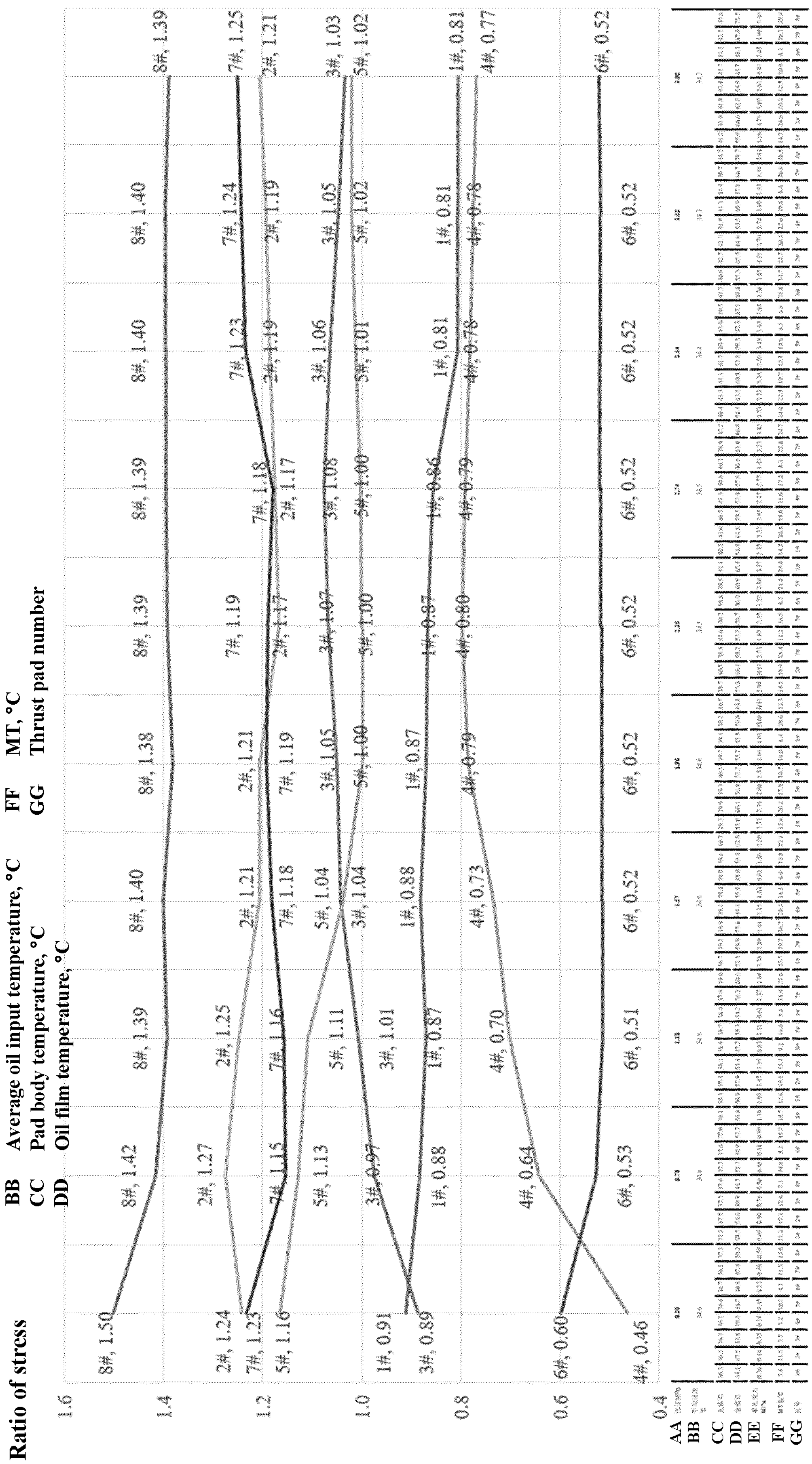
Ratio of stress
AA Specific pressure, Mpa
BB Average oil input temperature, °C
CC Pad body temperature, °C
DD Oil film temperature, °C
EE Stress of a single pad, MPa
FF MT, °C
GG Thrust pad number
1.6
1.4
1.2
1.0
0.8
0.6
0.4
8#, 1.50
2#, 1.24
7#, 1.23
5#, 1.16
1#, 0.91
3#, 0.89
6#, 0.60
4#, 0.46
8#, 1.42
2#, 1.27
7#, 1.15
5#, 1.13
3#, 0.97
1#, 0.88
4#, 0.64
6#, 0.53
8#, 1.39
2#, 1.25
7#, 1.16
5#, 1.11
3#, 1.01
1#, 0.87
4#, 0.70
6#, 0.51
8#, 1.40
2#, 1.21
7#, 1.18
5#, 1.04
3#, 1.04
1#, 0.88
4#, 0.73
6#, 0.52
8#, 1.38
2#, 1.21
7#, 1.19
3#, 1.05
5#, 1.00
1#, 0.87
4#, 0.79
6#, 0.52
8#, 1.39
7#, 1.19
2#, 1.17
3#, 1.07
5#, 1.00
1#, 0.87
4#, 0.80
6#, 0.52
8#, 1.39
7#, 1.18
2#, 1.17
3#, 1.08
5#, 1.00
1#, 0.86
4#, 0.79
6#, 0.52
8#, 1.40
7#, 1.23
2#, 1.19
3#, 1.06
5#, 1.01
1#, 0.81
4#, 0.78
6#, 0.52
8#, 1.40
7#, 1.24
2#, 1.19
3#, 1.05
5#, 1.02
1#, 0.81
4#, 0.78
6#, 0.52
8#, 1.39
7#, 1.25
2#, 1.21
3#, 1.03
5#, 1.02
1#, 0.81
4#, 0.77
6#, 0.52
AA
BB
CC
DD
EE
FF
GG

FIG. 2

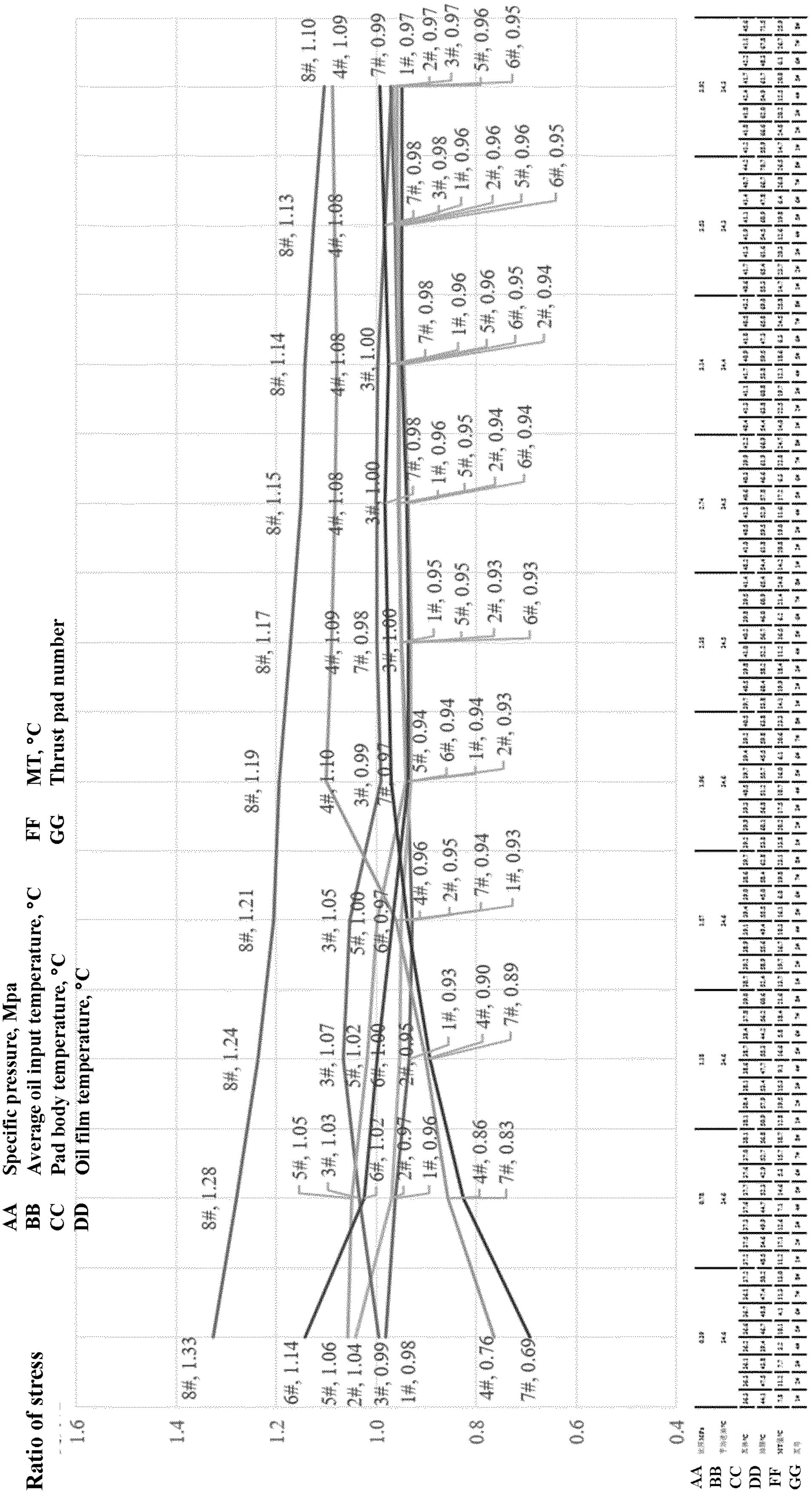
Ratio of stress
1.6
1.4
1.2
1.0
0.8
0.6
0.4
AA Specific pressure, Mpa
BB Average oil input temperature, °C
CC Pad body temperature, °C
DD Oil film temperature, °C
FF MT, °C
GG Thrust pad number

FIG. 3

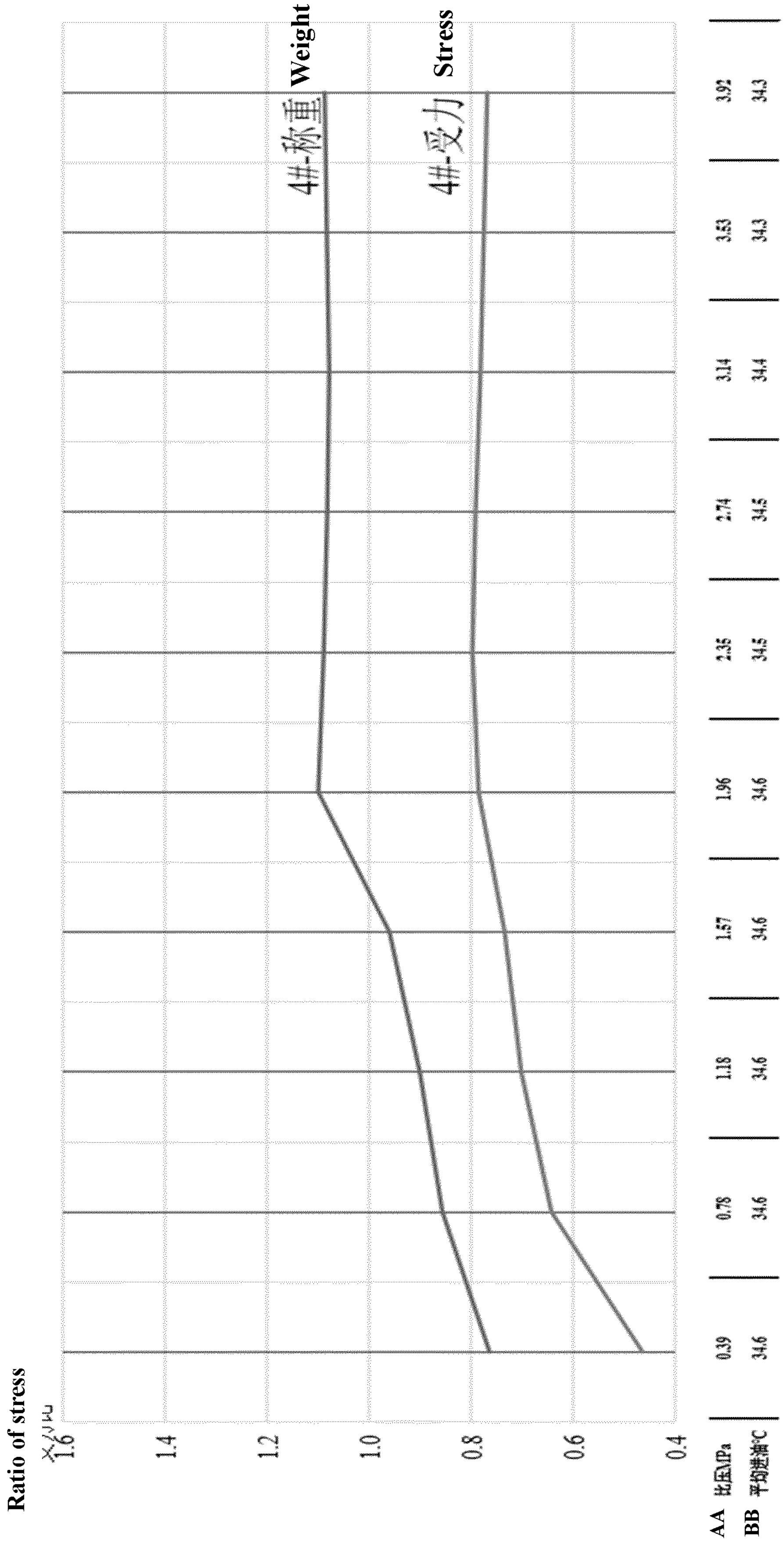


AA Specific pressure, Mpa
BB Average oil input temperature, °C

FIG. 4

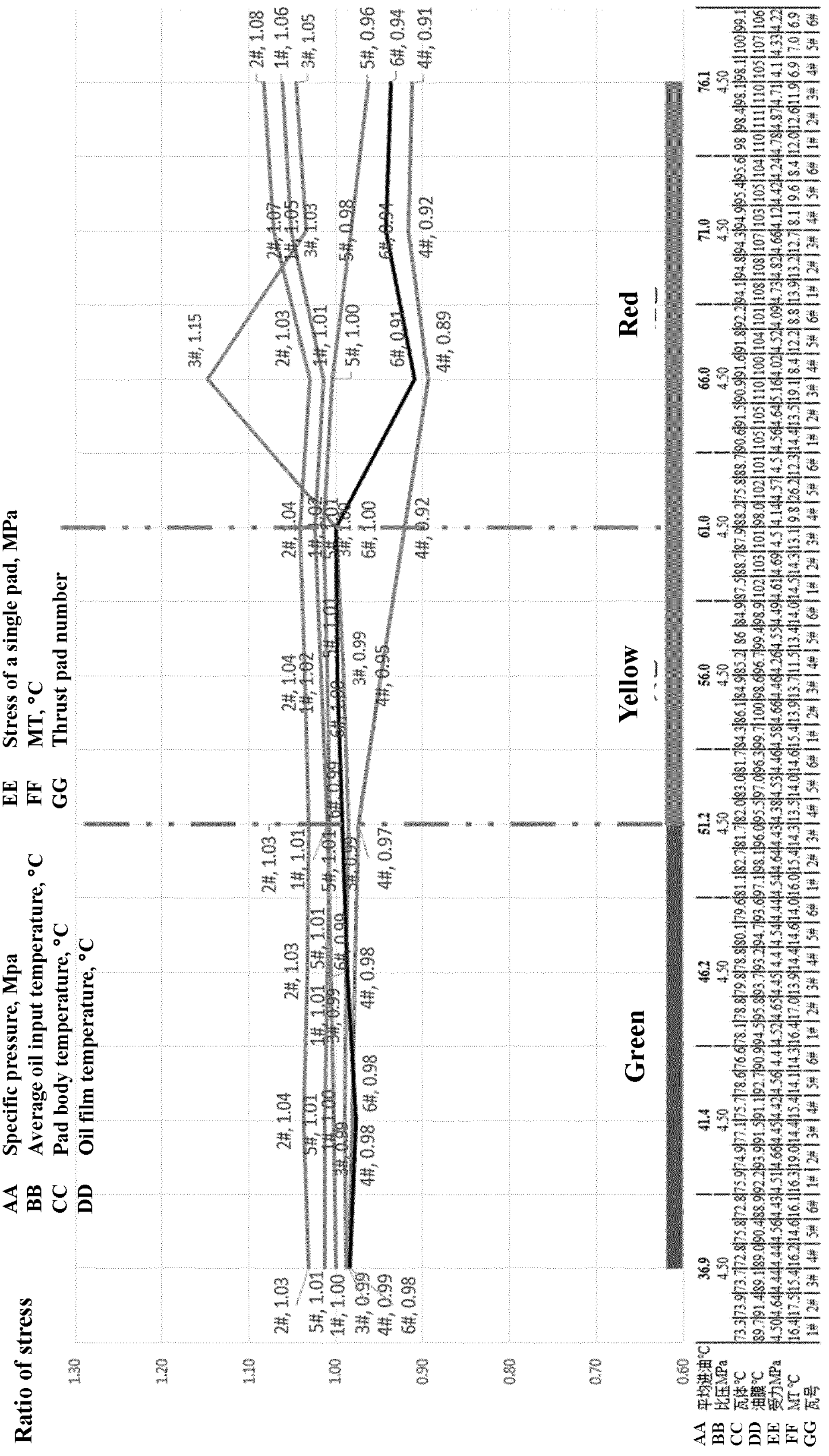
Ratio of stress
AA Specific pressure, Mpa
BB Average oil input temperature, °C
CC Pad body temperature, °C
DD Oil film temperature, °C
EE Stress of a single pad, MPa
FF MT, °C
GG Thrust pad number
Green
Yellow
Red

FIG. 5

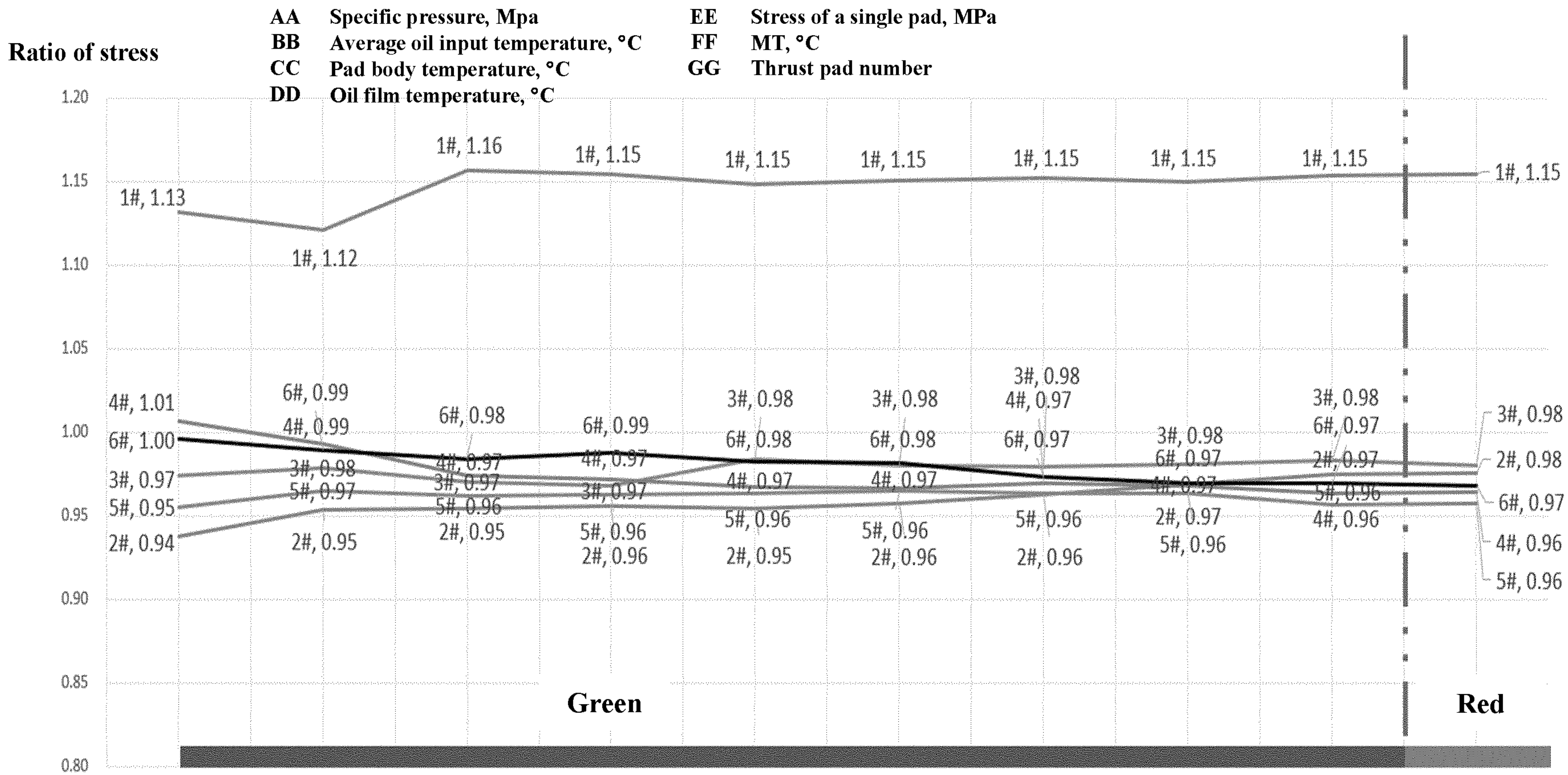


| AA 平均进油°C | 35.0 | | | | | |
|---|---|---|---|---|---|---|
| BB 比压MPa | 4.50 | | | | | |
| CC 瓦体°C | 46.8 | 40.3 | 39.3 | 44.9 | 40.9 | 45.8 |
| DD 油膜°C | 84.1 | 75.7 | 77.3 | 78.6 | 76.4 | 78.2 |
| EE 受力MPa | 5.09 | 4.22 | 4.38 | 4.53 | 4.3 | 4.48 |
| FF MT °C | 37.3 | 35.4 | 38 | 33.7 | 35.5 | 32.4 |
| GG 瓦号 | 1# | 2# | 3# | 4# | 5# | 6# |

| AA 平均进油°C | 39.8 | | | | | |
|---|---|---|---|---|---|---|
| BB 比压MPa | 4.50 | | | | | |
| CC 瓦体°C | 56.8 | 49.8 | 49 | 54.2 | 51 | 55.7 |
| DD 油膜°C | 89.8 | 82.3 | 83.4 | 84.1 | 82.8 | 83.9 |
| EE 受力MPa | 5.04 | 4.29 | 4.4 | 4.47 | 4.34 | 4.45 |
| FF MT °C | 33 | 32.5 | 34.4 | 29.9 | 31.8 | 28.2 |
| GG 瓦号 | 1# | 2# | 3# | 4# | 5# | 6# |

| AA 平均进油°C | 44.7 | | | | | |
|---|---|---|---|---|---|---|
| BB 比压MPa | 4.50 | | | | | |
| CC 瓦体°C | 61.2 | 54.4 | 53.4 | 59.6 | 55 | 59.9 |
| DD 油膜°C | 95 | 86.2 | 86.9 | 87 | 86.5 | 87.4 |
| EE 受力MPa | 5.2 | 4.29 | 4.37 | 4.38 | 4.33 | 4.43 |
| FF MT °C | 33.8 | 31.8 | 33.5 | 27.4 | 31.5 | 27.5 |
| GG 瓦号 | 1# | 2# | 3# | 4# | 5# | 6# |

| AA 平均进油°C | 49.6 | | | | | |
|---|---|---|---|---|---|---|
| BB 比压MPa | 4.50 | | | | | |
| CC 瓦体°C | 65.4 | 59.2 | 57.7 | 64.3 | 59.2 | 64.1 |
| DD 油膜°C | 97.5 | 89.3 | 89.8 | 89.9 | 89.6 | 90.6 |
| EE 受力MPa | 5.19 | 4.3 | 4.36 | 4.37 | 4.33 | 4.44 |
| FF MT °C | 32.1 | 30.1 | 32.1 | 25.6 | 30.4 | 26.5 |
| GG 瓦号 | 1# | 2# | 3# | 4# | 5# | 6# |

| AA 平均进油°C | 54.6 | | | | | |
|---|---|---|---|---|---|---|
| BB 比压MPa | 4.50 | | | | | |
| CC 瓦体°C | 69.6 | 63.7 | 64.9 | 68.4 | 63.5 | 67.8 |
| DD 油膜°C | 100 | 92.6 | 93.8 | 93.1 | 92.9 | 93.7 |
| EE 受力MPa | 5.17 | 4.3 | 4.43 | 4.35 | 4.34 | 4.42 |
| FF MT °C | 30.4 | 28.9 | 28.9 | 24.7 | 29.4 | 25.9 |
| GG 瓦号 | 1# | 2# | 3# | 4# | 5# | 6# |

| AA 平均进油°C | 59.5 | | | | | |
|---|---|---|---|---|---|---|
| BB 比压MPa | 4.50 | | | | | |
| CC 瓦体°C | 74 | 68.2 | 69 | 72.7 | 40.9 | 71.7 |
| DD 油膜°C | 103 | 96 | 97 | 96 | 96 | 97 |
| EE 受力MPa | 5.18 | 4.31 | 4.41 | 4.35 | 4.34 | 4.42 |
| FF MT °C | 29 | 27.8 | 28 | 23.3 | 55.1 | 25.3 |
| GG 瓦号 | 1# | 2# | 3# | 4# | 5# | 6# |

| AA 平均进油°C | 64.5 | | | | | |
|---|---|---|---|---|---|---|
| BB 比压MPa | 4.50 | | | | | |
| CC 瓦体°C | 78.1 | 72.6 | 73.2 | 76.9 | 72.2 | 74.3 |
| DD 油膜°C | 106 | 99 | 100 | 99 | 99 | 100 |
| EE 受力MPa | 5.18 | 4.33 | 4.41 | 4.36 | 4.34 | 4.38 |
| FF MT °C | 27.9 | 26.4 | 26.8 | 22.1 | 26.8 | 25.7 |
| GG 瓦号 | 1# | 2# | 3# | 4# | 5# | 6# |

| AA 平均进油°C | 69.5 | | | | | |
|---|---|---|---|---|---|---|
| BB 比压MPa | 4.50 | | | | | |
| CC 瓦体°C | 82 | 77.3 | 77.5 | 81.4 | 76.4 | 78.2 |
| DD 油膜°C | 109 | 103 | 103 | 103 | 103 | 103 |
| EE 受力MPa | 5.17 | 4.36 | 4.41 | 4.35 | 4.34 | 4.36 |
| FF MT °C | 27 | 25.7 | 25.5 | 21.6 | 26.6 | 24.8 |
| GG 瓦号 | 1# | 2# | 3# | 4# | 5# | 6# |

| AA 平均进油°C | 74.5 | | | | | |
|---|---|---|---|---|---|---|
| BB 比压MPa | 4.50 | | | | | |
| CC 瓦体°C | 85.9 | 81.8 | 81.6 | 85.7 | 80.4 | 82.4 |
| DD 油膜°C | 112 | 106 | 106 | 106 | 106 | 106 |
| EE 受力MPa | 5.19 | 4.38 | 4.42 | 4.33 | 4.3 | 4.36 |
| FF MT °C | 26.1 | 24.2 | 24.4 | 20.3 | 25.6 | 23.6 |
| GG 瓦号 | 1# | 2# | 3# | 4# | 5# | 6# |

| AA 平均进油°C | 79.5 | | | | | |
|---|---|---|---|---|---|---|
| BB 比压MPa | 4.50 | | | | | |
| CC 瓦体°C | 89.6 | 85.9 | 85.4 | 89.6 | 84.3 | 86.5 |
| DD 油膜°C | 115 | 110 | 110 | 109 | 109 | 109 |
| EE 受力MPa | 5.2 | 4.39 | 4.41 | 4.34 | 4.31 | 4.35 |
| FF MT °C | 25.4 | 24.1 | 24.6 | 19.4 | 24.7 | 22.5 |
| GG 瓦号 | 1# | 2# | 3# | 4# | 5# | 6# |

FIG. 6

| | |
|---|---|
| AA | Specific pressure, Mpa |
| BB | Average oil input temperature, °C |
| CC | Pad body temperature, °C |
| DD | Oil film temperature, °C |
| EE | Stress of a single pad, MPa |
| FF | MT, °C |
| GG | Thrust pad number |

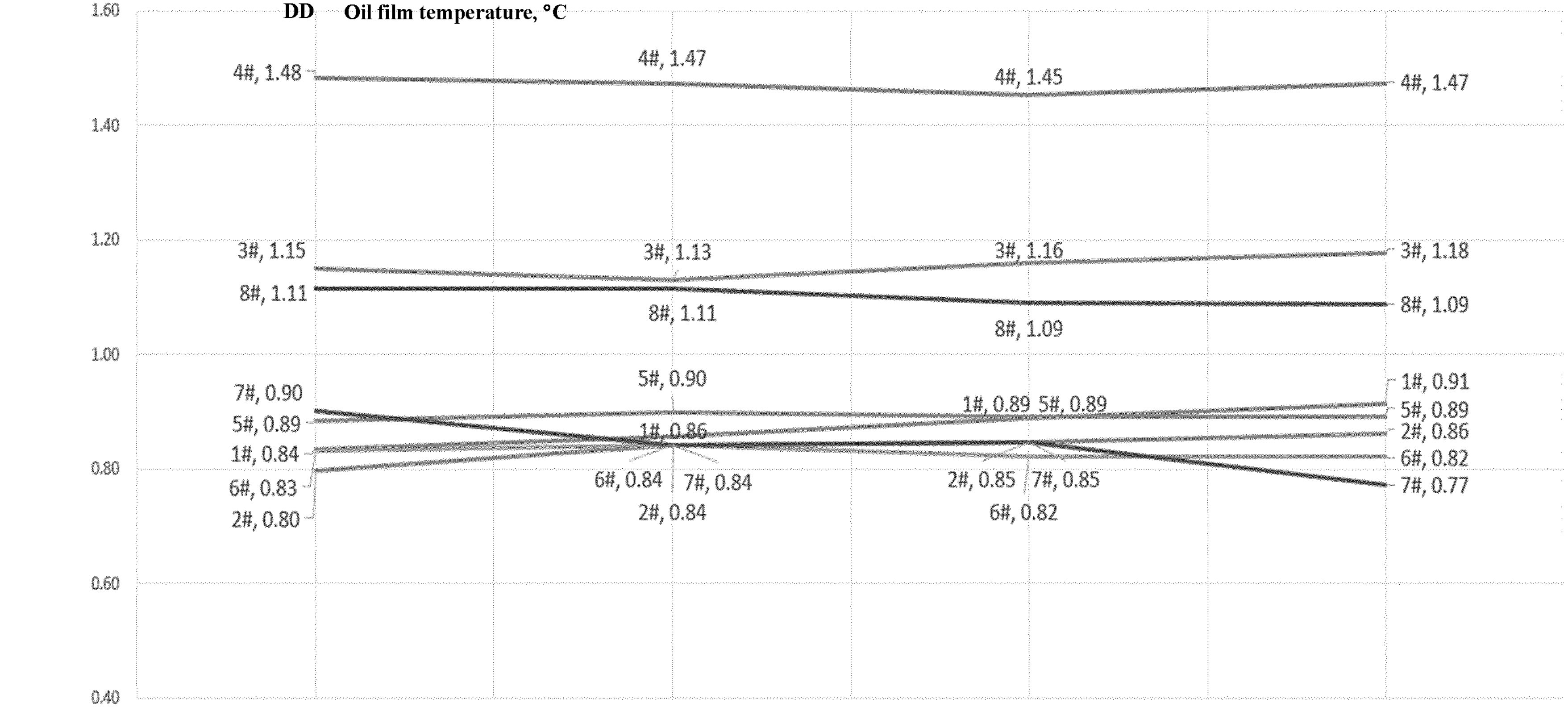


| | | | | | | | | | |
|---|---|---|---|---|---|---|---|---|---|
| AA | 比压MPa | 2.28 | | | | | | | |
| BB | 平均进油°C | 40.9 | | | | | | | |
| CC | 瓦体°C | 42.0 | 41.1 | 41.6 | 41.3 | 41.5 | 41.7 | 41.0 | 41.6 |
| DD | 油膜°C | 45.6 | 45.4 | 47.4 | 49.3 | 45.9 | 45.6 | 46.0 | 47.2 |
| EE | 受力MPa | 1.91 | 1.82 | 2.62 | 3.38 | 2.02 | 1.9 | 2.06 | 2.54 |
| FF | MT °C | 3.6 | 4.3 | 5.8 | 8.0 | 4.4 | 3.9 | 5.0 | 5.6 |
| GG | 瓦号 | 1# | 2# | 3# | 4# | 5# | 6# | 7# | 8# |

| | | | | | | | | | |
|---|---|---|---|---|---|---|---|---|---|
| AA | 比压MPa | 3.42 | | | | | | | |
| BB | 平均进油°C | 41.4 | | | | | | | |
| CC | 瓦体°C | 43.3 | 42.5 | 42.9 | 42.5 | 43.0 | 43.0 | 42.3 | 42.8 |
| DD | 油膜°C | 47.4 | 47.3 | 49.3 | 51.7 | 47.7 | 47.3 | 47.3 | 49.2 |
| EE | 受力MPa | 2.93 | 2.88 | 3.86 | 5.04 | 3.08 | 2.88 | 2.88 | 3.81 |
| FF | MT °C | 4.1 | 4.8 | 6.4 | 9.2 | 4.7 | 4.3 | 5.0 | 6.4 |
| GG | 瓦号 | 1# | 2# | 3# | 4# | 5# | 6# | 7# | 8# |

| | | | | | | | | | |
|---|---|---|---|---|---|---|---|---|---|
| AA | 比压MPa | 4.56 | | | | | | | |
| BB | 平均进油°C | 41.2 | | | | | | | |
| CC | 瓦体°C | 44.1 | 43.2 | 43.7 | 43.2 | 43.6 | 43.6 | 42.8 | 43.5 |
| DD | 油膜°C | 48.9 | 48.5 | 51.2 | 53.7 | 48.9 | 48.3 | 48.5 | 50.6 |
| EE | 受力MPa | 4.06 | 3.86 | 5.29 | 6.62 | 4.07 | 3.75 | 3.86 | 4.97 |
| FF | MT °C | 4.8 | 5.3 | 7.5 | 10.5 | 5.3 | 4.7 | 5.7 | 7.1 |
| GG | 瓦号 | 1# | 2# | 3# | 4# | 5# | 6# | 7# | 8# |

| | | | | | | | | | |
|---|---|---|---|---|---|---|---|---|---|
| AA | 比压MPa | 5.76 | | | | | | | |
| BB | 平均进油°C | 41.7 | | | | | | | |
| CC | 瓦体°C | 45.3 | 44.5 | 44.6 | 44.1 | 44.8 | 44.4 | 43.8 | 44.5 |
| DD | 油膜°C | 51.0 | 50.5 | 53.7 | 56.7 | 50.8 | 50.1 | 49.6 | 52.8 |
| EE | 受力MPa | 5.27 | 4.96 | 6.78 | 8.48 | 5.13 | 4.74 | 4.45 | 6.27 |
| FF | MT °C | 5.7 | 6.0 | 9.1 | 12.6 | 6.0 | 5.7 | 5.8 | 8.3 |
| GG | 瓦号 | 1# | 2# | 3# | 4# | 5# | 6# | 7# | 8# |

FIG. 7

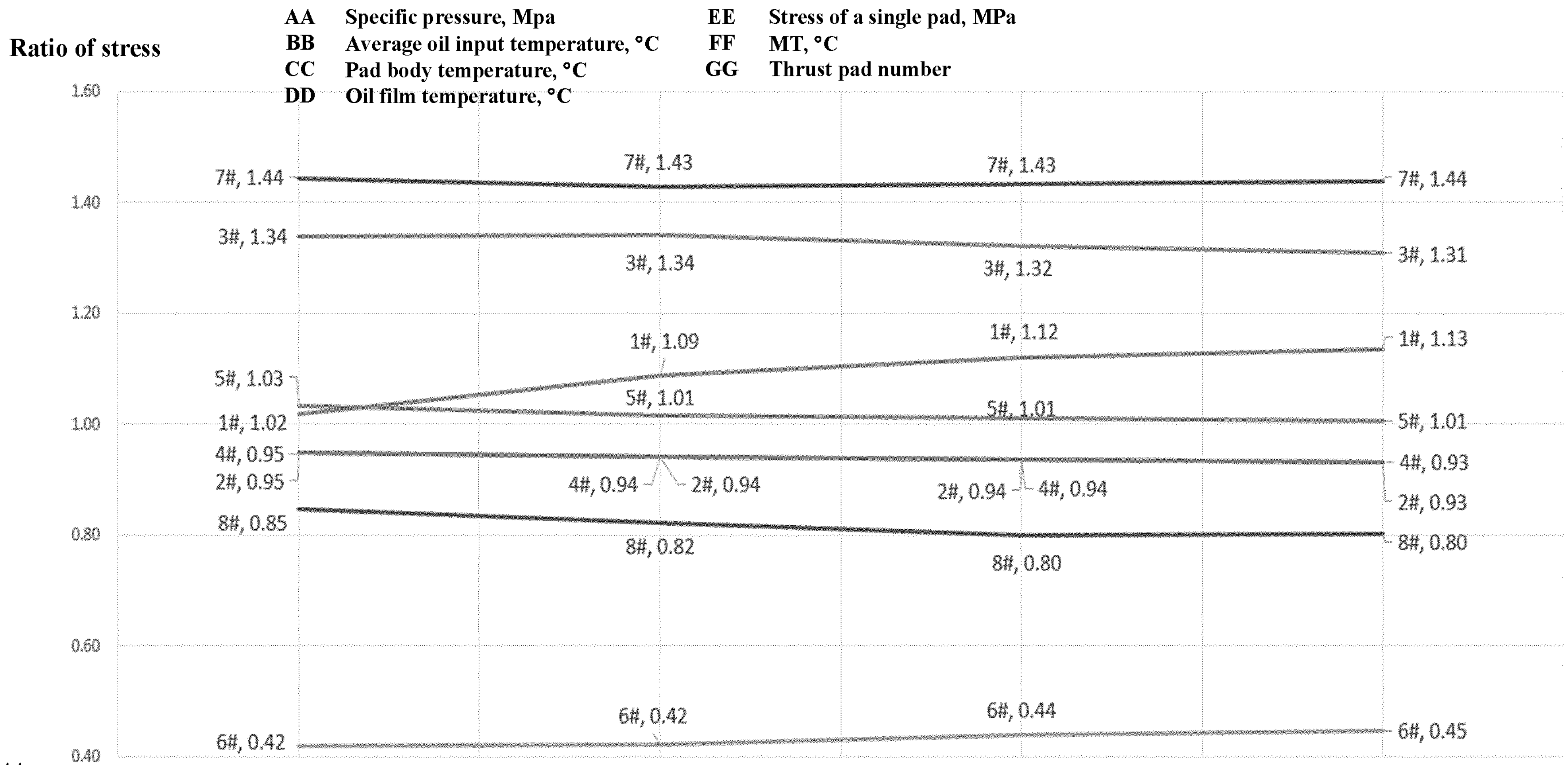


| | | | | | | | | | |
|---|---|---|---|---|---|---|---|---|---|
| AA | 比压MPa | 2.28 | | | | | | | |
| BB | 平均进油℃ | 40.5 | | | | | | | |
| CC | 瓦体℃ | 42.0 | 41.8 | 42.0 | 41.8 | 42.1 | 42.3 | 40.8 | 41.7 |
| DD | 油膜℃ | 46.5 | 46.1 | 48.4 | 46.1 | 46.6 | 43.0 | 49.0 | 45.5 |
| EE | 受力MPa | 2.32 | 2.16 | 3.06 | 2.16 | 2.36 | 0.96 | 3.29 | 1.93 |
| FF | MT ℃ | 4.5 | 4.3 | 6.4 | 4.3 | 4.5 | 0.7 | 8.2 | 3.8 |
| GG | 瓦号 | 1# | 2# | 3# | 4# | 5# | 6# | 7# | 8# |

| | | | | | | | | | |
|---|---|---|---|---|---|---|---|---|---|
| AA | 比压MPa | 3.42 | | | | | | | |
| BB | 平均进油℃ | 40.7 | | | | | | | |
| CC | 瓦体℃ | 42.5 | 42.5 | 42.5 | 42.6 | 42.7 | 42.8 | 41.3 | 42.4 |
| DD | 油膜℃ | 48.1 | 47.1 | 49.8 | 47.1 | 47.6 | 43.6 | 50.4 | 46.3 |
| EE | 受力MPa | 3.72 | 3.22 | 4.58 | 3.22 | 3.47 | 1.45 | 4.89 | 2.81 |
| FF | MT ℃ | 5.6 | 4.6 | 7.3 | 4.5 | 4.9 | 0.8 | 9.1 | 3.9 |
| GG | 瓦号 | 1# | 2# | 3# | 4# | 5# | 6# | 7# | 8# |

| | | | | | | | | | |
|---|---|---|---|---|---|---|---|---|---|
| AA | 比压MPa | 4.56 | | | | | | | |
| BB | 平均进油℃ | 40.8 | | | | | | | |
| CC | 瓦体℃ | 43.2 | 43.4 | 43.2 | 43.3 | 43.5 | 43.5 | 42.0 | 43.1 |
| DD | 油膜℃ | 49.9 | 48.4 | 51.5 | 48.4 | 49.0 | 44.4 | 52.4 | 47.3 |
| EE | 受力MPa | 5.11 | 4.27 | 6.02 | 4.27 | 4.61 | 2.01 | 6.53 | 3.65 |
| FF | MT ℃ | 6.7 | 5.0 | 8.3 | 5.1 | 5.5 | 0.9 | 10.4 | 4.2 |
| GG | 瓦号 | 1# | 2# | 3# | 4# | 5# | 6# | 7# | 8# |

| | | | | | | | | | |
|---|---|---|---|---|---|---|---|---|---|
| AA | 比压MPa | 5.76 | | | | | | | |
| BB | 平均进油℃ | 41.1 | | | | | | | |
| CC | 瓦体℃ | 43.9 | 44.2 | 43.9 | 44.2 | 44.4 | 44.5 | 42.6 | 43.7 |
| DD | 油膜℃ | 51.6 | 49.7 | 53.2 | 49.7 | 50.4 | 45.2 | 54.4 | 48.5 |
| EE | 受力MPa | 6.53 | 5.37 | 7.54 | 5.37 | 5.80 | 2.57 | 8.28 | 4.62 |
| FF | MT ℃ | 7.7 | 5.5 | 9.3 | 5.5 | 6.0 | 0.7 | 11.8 | 4.8 |
| GG | 瓦号 | 1# | 2# | 3# | 4# | 5# | 6# | 7# | 8# |

FIG. 8

**INTERNATIONAL SEARCH REPORT**

International application No.
**PCT/CN2022/107314**

**A. CLASSIFICATION OF SUBJECT MATTER**

G06F 30/20(2020.01)i； G06F 17/18(2006.01)n； G01D 21/02(2006.01)n； G06F 119/08(2020.01)n； G06F 119/14(2020.01)n

According to International Patent Classification (IPC) or to both national classification and IPC

**B. FIELDS SEARCHED**

Minimum documentation searched (classification system followed by classification symbols)

G06F; G01D

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 油膜, 推力轴承, 传感器, 推力瓦, 温度, 平均值, 差值, 受力, 运行状态, 监测, 诊断, oil film, thrust bearing, sensor, thrust pad, temperature, average value, difference value, stress, operation status, monitor+, diagnosis

**C. DOCUMENTS CONSIDERED TO BE RELEVANT**

| Category* | Citation of document, with indication, where appropriate, of the relevant passages | Relevant to claim No. |
|---|---|---|
| PX | CN 113536586 A (DALIAN SANHUAN COMPOSITE MATERIAL TECHNOLOGY DEVELOPMENT CO., LTD.) 22 October 2021 (2021-10-22)<br>claims 1-10, and description, paragraphs [0051]-[0179], and figure 1-8 | 1-10 |
| A | CN 109406145 A (DALIAN SANHUAN COMPOSITE MATERIAL TECHNOLOGY DEVELOPMENT CO., LTD. et al.) 01 March 2019 (2019-03-01)<br>description, paragraphs [0005]-[0102], and figures 1-9 | 1-10 |
| A | CN 110715753 A (DALIAN SANHUAN COMPOSITE MATERIAL TECHNOLOGY DEVELOPMENT CO., LTD.) 21 January 2020 (2020-01-21)<br>entire document | 1-10 |
| A | CN 109186442 A (DALIAN SANHUAN COMPOSITE MATERIAL TECHNOLOGY DEVELOPMENT CO., LTD.) 11 January 2019 (2019-01-11)<br>entire document | 1-10 |
| A | CN 104483963 A (STATE GRID CORPORATION OF CHINA et al.) 01 April 2015 (2015-04-01)<br>entire document | 1-10 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **16 September 2022** | **28 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/107314**

| Patent document cited in search report | Publication date (day/month/year) | Patent family member(s) | Publication date (day/month/year) |
|---|---|---|---|
| CN 113536586 A | 22 October 2021 | None | |
| CN 109406145 A | 01 March 2019 | CN 109406145 B | 30 June 2020 |
| CN 110715753 A | 21 January 2020 | CN 210893474 U | 30 June 2020 |
| CN 109186442 A | 11 January 2019 | CN 109186442 B | 25 August 2020 |
| CN 104483963 A | 01 April 2015 | CN 104483963 B | 03 May 2017 |

Form PCT/ISA/210 (patent family annex) (January 2015)